# EUROPÄISCHE PATENTSCHRIFT

(11) **EP 4 296 006 B1**
(45) Veröffentlichungstag und Bekanntmachung des Hinweises auf die Patenterteilung: **21.05.2025**
(21) Anmeldenummer: 23179756.4
(22) Anmeldetag: 16.06.2023
(51) Int. Cl.: B25D 13/00, H02K 44/04, H02K 7/14

(54) **WERKZEUGMASCHINE UND VERFAHREN ZUM BETRIEB EINER WERKZEUGMASCHINE**
MACHINE TOOL AND METHOD FOR OPERATING A MACHINE TOOL
MACHINE-OUTIL ET PROCÉDÉ DE FONCTIONNEMENT D'UNE MACHINE-OUTIL

(30) Priorität: 21.06.2022 DE 102022206176
(43) Veröffentlichungstag der Anmeldung: 27.12.2023
(73) Patentinhaber: Robert Bosch GmbH, 70442 Stuttgart (DE)
(72) Erfinder: Kocourek, Vaclav, 71717 Beilstein (DE); Astner, Martin, 74385 Pleidelsheim (DE); Klein, Rico Alf, 74223 Flein (DE); Schulz, Udo, 71665 Vaihingen/Enz (DE); Schmid, Hardy, 70565 Stuttgart (DE)

(56) Entgegenhaltungen:
- EP-A2- 2 036 680
- DE-A1- 102006 041 863
- DE-A1- 102008 043 136
- US-A1- 2015 345 519

## Beschreibung

### Stand der Technik

Es ist bereits eine Werkzeugmaschine mit einem Werkzeug und mit einer Schlagvorrichtung, welche eine Schlagantriebseinheit zur Erzeugung und Übertragung einer Schlagkraft auf das Werkzeug aufweist, vorgeschlagen worden. EP 2 036 680 A2 offenbart eine solche Werkzeugmaschine.

### Offenbarung der Erfindung

Die Erfindung geht aus von einer Werkzeugmaschine mit einem Werkzeug und mit einer Schlagvorrichtung, welche eine Schlagantriebseinheit zur Erzeugung und Übertragung einer Schlagkraft auf das Werkzeug aufweist.

Es wird erfindungsgemäß vorgeschlagen, dass die Schlagantriebseinheit zumindest ein Schlagantriebsmodul zur Erzeugung der Schlagkraft basierend auf dem magnethydrodynamischen Effekt und zur Übertragung der Schlagkraft über ein Fluid auf das Werkzeug aufweist.

Vorzugsweise ist die Werkzeugmaschine als eine tragbare Handwerkzeugmaschine, beispielsweise als eine Schlagbohrmaschine und/oder als ein Schlagbohrschrauber und/oder als ein Bohrhammer und/oder als ein Abbruchhammer und/oder als ein Meißelhammer und/oder dergleichen, ausgebildet. Die Werkzeugmaschine könnte jedoch auch als eine stationäre Werkzeugmaschine, beispielsweise als eine Ständerbohrmaschine oder dergleichen, oder als eine in einen Bohrroboter integrierte Werkzeugmaschine ausgebildet sein.

Die Schlagvorrichtung ist ein Teil, bevorzugt eine Unterbaugruppe, der Werkzeugmaschine und umfasst zumindest die Schlagantriebseinheit. Die Schlagvorrichtung kann darüber hinaus weitere Einheiten und/oder Elemente umfassen. Die Schlagantriebseinheit ist zur Erzeugung und Übertragung einer Schlagkraft auf das Werkzeug vorgesehen und umfasst hierzu zumindest ein Schlagantriebsmodul. Das Schlagantriebsmodul ist zur Erzeugung der Schlagkraft basierend auf dem magnethydrdynamischen Effekt, wonach ein in einem Magnetfeld befindliches elektrisch leitendes Fluid beim Anlegen einer elektrischen Spannung zwischen zwei Elektroden, welche ein senkrecht zu dem Magnetfeld ausgerichtetes elektrisches Feld erzeugen, aufgrund der Lorentzkraft in einer Strömungsrichtung senkrecht zu dem Magnetfeld und senkrecht zu dem elektrischen Feld beschleunigt wird, vorgesehen.

Das in dem Schlagantriebsmodul zu der Erzeugung der Schlagkraft und zu der Übertragung der Schlagkraft verwendete Fluid ist ein elektrisch leitendes Fluid und weist freie Ladungsträger, beispielsweise freie Elektronen und/oder Ionen, auf, welche bei Anschluss einer Stromquelle in Bewegung versetzt werden und einen elektrischen Strom leiten. Vorzugsweise weist die Werkzeugmaschine zumindest ein Reservoir zur Bevorratung des Fluids, aus welchem das Fluid mittels des Schlagantriebsmoduls gesaugt werden kann, auf. Alternativ oder zusätzlich ist denkbar, dass das Fluid in einem Fluidkreislauf der Schlagantriebseinheit zirkuliert, wobei die Schlagantriebseinheit hierzu entsprechende Fluidleitungen aufweist.

Unter einem "Betriebszustand" soll ein Zustand verstanden werden, in dem die Werkzeugmaschine und/oder die Schlagantriebseinheit betriebsbereit für einen Betrieb ist/sind und/oder sich in einem Betrieb befindet/befinden. Bei dem Betrieb kann es sich um einen Bohrbetrieb und/oder einen Schlagbohrbetrieb und/oder um einen Schlagbetrieb handeln.

In dem vorliegenden Dokument dienen Zahlwörter, wie beispielsweise "erste/r/s" und "zweite/r/s", welche bestimmten Begriffen vorangestellt sind, lediglich zu einer Unterscheidung von Objekten und/oder einer Zuordnung zwischen Objekten untereinander und implizieren keine vorhandene Gesamtanzahl und/oder Rangfolge der Objekte. Insbesondere impliziert ein "zweites Objekt" nicht zwangsläufig ein Vorhandensein eines "ersten Objekts".

Unter "vorgesehen" soll speziell eingerichtet, speziell ausgelegt und/oder speziell ausgestattet verstanden werden. Darunter, dass ein Objekt zu einer bestimmten Funktion vorgesehen ist, soll vorzugsweise verstanden werden, dass das Objekt diese bestimmte Funktion in zumindest einem Anwendungs- und/oder Betriebszustand erfüllt und/oder ausführt.

Durch die erfindungsgemäße Ausgestaltung kann vorteilhaft eine besonders kompakte Werkzeugmaschine bereitgestellt werden. Ferner kann gegenüber herkömmlichen Werkzeugmaschinen, beispielsweise Schlagbohrmaschinen, in welchen die Schlagkraft über eine Rastscheibe erzeugt und über das Bohrfutter auf das Bohrwerkzeug übertragen wird, oder Bohrhammern, bei welchen die Schlagkraft über ein pneumatisches Schlagwerk erzeugt und direkt auf das Bohrwerkzeug übertragen wird, vorteilhaft eine Anzahl von rotierenden und/oder mechanisch kraftschlüssigen Bauteilen der Schlagantriebseinheit reduziert, vorzugsweise minimiert werden. Somit kann vorteilhaft ein Verschleiß reduziert werden. Zudem kann vorteilhaft eine Geräuschemission verringert werden.

Ferner wird vorzugsweise vorgeschlagen, dass das Schlagantriebsmodul zumindest einen Strömungskanal für das Fluid, zumindest zwei außerhalb des Strömungskanals angeordnete Magnetelemente und zumindest zwei mit dem Strömungskanal verbunden Steuerelektroden umfasst, wobei die Magnetelemente und die Steuerelektroden dazu vorgesehen sind, eine Lorentzkraft in dem Fluid zur Erzeugung der Schlagkraft zu bewirken. Hierdurch kann vorteilhaft eine Erzeugung der Schlagkraft unter Ausnutzung des magnethydrodynamischen Effekts mit einfachen technischen Mitteln ermöglicht werden. Der Strömungskanal weist Wände aus einem elektrisch isolierenden Material auf. Der Strömungskanal könnte einen konstanten Querschnitt aufweisen. Denkbar ist auch, dass der Strömungskanal einen Querschnitt aufweist, welcher sich in Richtung des Werkzeugs verjüngt. Hierdurch kann vorteilhaft ein Fluiddruck in dem Strömungskanal und damit die Schlagkraft erhöht werden. Die Magnetelemente des Schlagantriebsmoduls sind vorzugsweise auf zueinander gegenüberliegenden Seiten außerhalb des Strömungskanals angeordnet. Ein erstes Magnetelement der Magnetelemente weist, zumindest zeitweise oder permanent, eine erste magnetische Polarität und ein zweites Magnetelement der Magnetelemente weist, zumindest zeitweise oder permanent, eine der ersten magnetischen Polarität entgegengesetzte zweite magnetische Polarität auf, sodass zwischen den Magnetelementen ein Magnetfeld besteht, welches vorzugsweise im Wesentlichen senkrecht zu einer Haupterstreckungsrichtung des Strömungskanals ausgerichtet ist. Unter einer "Haupterstreckungsrichtung" eines Objekts soll dabei eine Richtung verstanden werden, welche parallel zu einer längsten Kante eines kleinsten geometrischen Quaders verläuft, welcher das Objekt gerade noch vollständig umschließt. Die Magnetelemente könnten als Permanentmagnete ausgebildet sein. Denkbar ist auch, dass die Magnetelemente als Elektromagnete ausgebildet sind. Die Steuerelektroden sind vorzugsweise in die Kanalwände des Strömungskanals eingebettet und stehen in einem Betriebszustand der Schlagantriebseinheit in Kontakt mit dem innerhalb des Strömungskanals befindlichen Fluid. Die Steuerelektroden könnten derart in die Kanalwände des Strömungskanals eingebettet sein, dass sie in den Strömungskanal hineinragen. Vorzugsweise sind die Steuerelektroden jedoch derart in die Kanalwände des Strömungskanals eingebettet, dass sie jeweils bündig mit einer Innenseite eine Kanalwand des Strömungskanals abschließen. Beim Anlegen einer Spannung an den Steuerelektroden entsteht in dem Strömungskanal ein elektrisches Feld, welches zumindest im Wesentlichen senkrecht zu dem durch die Magnetelemente erzeugten magnetischen Feld ausgerichtet ist, sodass eine Lorentzkraft in dem Fluid erzeugt wird und das Fluid in dem Strömungskanal in Richtung der Lorentzkraft beschleunigt wird. Unter "zumindest im Wesentlichen senkrecht" soll in diesem Dokument eine Ausrichtung einer Richtung verstanden werden, welche mit einer Bezugsrichtung einen Winkel zwischen 85° und 95°, insbesondere einen Winkel zwischen 86° und 94°, vorteilhaft einen Winkel zwischen 87° und 93°, besonders vorteilhaft einen Winkel zwischen 88° und 92°, vorzugsweise einen Winkel zwischen 89° und 91° und besonders bevorzugt einen Winkel von 90° einschließt.

Zudem wird vorzugsweise vorgeschlagen, dass die Werkzeugmaschine eine mit den Steuerelektroden des Schlagantriebsmoduls verbundene Steuer- und/oder Regeleinheit zur Steuerung und/oder Regelung der Schlagantriebseinheit mittels eines Steuerstroms aufweist. Hierdurch kann vorteilhaft eine gezielte Steuerung und/oder Regelung der Schlagkraft ermöglicht werden. Es kann/können vorteilhaft die durch die Schlagantriebseinheit erzeugte Schlagkraft und/oder ein erzeugter Schlagimpuls und/oder eine erzeugte Schlagfrequenz variabel und gezielt eingestellt werden. Unter einer "Steuer- und/oder Regeleinheit" soll eine Einheit mit zumindest einer Steuerelektronik verstanden werden. Unter einer "Steuerelektronik" soll eine Einheit mit einer Prozessoreinheit und mit einer Speichereinheit sowie mit einem in der Speichereinheit gespeicherten Betriebsprogramm verstanden werden. Bei dem Steuerstrom kann es sich um einen Gleichstrom oder um einen Wechselstrom handeln. Vorzugsweise ist die Steuer- und/oder Regeleinheit jeweils mit den jeweiligen Steuerelektroden jedes Schlagantriebsmoduls der Schlagantriebseinheit verbunden und zur Steuerung der Schlagantriebsmodule mit einem Steuerstrom vorgesehen. Die Steuer- und/oder Regeleinheit könnte zur Steuerung und/oder Regelung verschiedener Schlagantriebsmodule der Schlagantriebseinheit dazu vorgesehen sein, jeweils Steuerströme heranzuziehen, welche denselben Betrag und/oder dieselbe Phasenlage aufweisen. Denkbar ist auch, dass die Steuereinheit dazu vorgesehen ist, zu Steuerung und/oder Regelung einiger oder aller Schlagantriebsmodule der Schlagantriebseinheit verschiedene Steuerströme heranzuziehen, welche sich hinsichtlich eines Betrages und/oder einer Phasenlage voneinander unterscheiden.

Des Weiteren wird vorzugsweise vorgeschlagen, dass die Steuer- und/oder Regeleinheit dazu vorgesehen ist, durch Änderung einer Stromrichtung des Steuerstroms eine Umkehr einer Strömungsrichtung des Fluids in dem Strömungskanal zu erzeugen. Durch eine derartige Ausgestaltung kann vorteilhaft ein besonders effizienter Betrieb der Werkzeugmaschine ermöglicht werden. Es kann vorteilhaft eine besonders intensive Schlagwirkung und/oder hohe Schlagfrequenz erzeugt werden. Vorzugsweise ist die Steuer- und/oder Regeleinheit dazu vorgesehen, durch mehrfache Änderung der Stromrichtung des Steuerstroms ein abwechselndes Pumpen und Saugen des Fluids zu erzeugen. Vorzugsweise ist eine Frequenz einer Änderung der Stromrichtung durch die Steuer- und/oder Regeleinheit und damit eine Schlagfrequenz der erzeugten Schlagkraft durch einen Nutzer einstellbar. Vorzugsweise weist die Schlagantriebseinheit zumindest einen Rückführungskanal zur Rückführung des Fluids in den Strömungskanal auf.

Darüber hinaus wird vorzugsweise vorgeschlagen, dass die Steuer- und/oder Regeleinheit dazu vorgesehen ist, das Schlagantriebsmodul mit einem gepulsten Steuerstrom anzusteuern, um Druckwellen in dem Fluid zu erzeugen. Hierdurch kann vorteilhaft eine größere Schlagkraft und/oder Schlagfrequenz erzeugt werden. Die Steuer- und/oder Regeleinheit kann dazu vorgesehen sein, das Schlagantriebsmodul und/oder zumindest ein weiteres Schlagantriebsmodul der Schlagantriebseinheit jeweils mit einem gepulsten Steuerstrom anzusteuern, um Druckwellen in dem Fluid zu erzeugen. Die Steuer -und/oder Regeleinheit kann, insbesondere in Abhängigkeit einer durch einen Nutzer wählbaren Betriebsart der Werkzeugmaschine, dazu vorgesehen sein, zu der Ansteuerung des Schlagantriebsmoduls und/oder des zumindest einen weiteren Schlagantriebsmoduls zumindest ein elektrisches Ansteuermuster heranzuziehen, wobei der gepulste Steuerstrom des elektrischen Ansteuermusters beispielsweise einen sinusförmigen oder rechteckförmigen oder einen anderen, einem Fachmann als sinnvoll erscheinenden zeitlichen Verlauf aufweisen kann. Die Steuer- und/oder Regeleinheit kann dazu vorgesehen sein, zu der Ansteuerung des Schlagantriebsmoduls und des weiteren Schlagantriebsmoduls dasselbe elektrische Ansteuermuster heranzuziehen. Alternativ kann die Steuer- und/oder Regeleinheit auch dazu vorgesehen sein, einige oder alle Schlagbohrmodule der Schlagantriebseinheit mit einem eigenen separaten elektrischen Ansteuermuster anzusteuern.

Ferner wird vorzugsweise vorgeschlagen, dass die Schlagantriebseinheit zumindest ein weiteres Schlagantriebsmodul aufweist, welches im Wesentlichen identisch zu dem Schlagantriebsmodul ausgebildet ist, wobei das Schlagantriebsmodul und das weitere Schlagantriebsmodul hydraulisch so miteinander verschaltet sind, dass sich die in den jeweiligen Schlagantriebsmodulen erzeugten Kräfte zu der Schlagkraft addieren und/oder dass sich die Durchflüsse des Fluids addieren. Durch eine derartige Ausgestaltung kann vorteilhaft eine besonders hohe Schlagkraft erzeugt werden. Die Schlagantriebseinheit kann neben dem Schlagantriebsmodul und dem weiteren Schlagantriebsmodul zumindest ein zusätzliches Schlagantriebsmodul aufweisen, welches im Wesentlichen identisch zu dem Schlagantriebsmodul ausgebildet und mit dem Schlagantriebsmodul und dem weiteren Schlagantriebsmodul hydraulisch so verschaltet sein kann, dass sich die in den jeweiligen Schlagantriebsmodulen erzeugten Kräfte zu der Schlagkraft addieren. Grundsätzlich kann die Schlagantriebseinheit eine beliebige zur Erzeugung einer bestimmten Schlagkraft notwendige Anzahl von hydraulisch miteinander verschalteten Schlagantriebsmodulen aufweisen. Vorzugsweise sind das Schlagantriebsmodul und das weitere Schlagantriebsmodul elektrisch in Reihe miteinander verschaltet.

Zudem wird vorzugsweise vorgeschlagen, dass das Schlagantriebsmodul und das weitere Schlagantriebsmodul miteinander hydraulisch in Reihe verschaltet sind. Hierdurch kann vorteilhaft eine besonders präzise Einstellung Stärke der Schlagkraft ermöglicht werden. Vorzugsweis sind das Schlagantriebsmodul und das weitere Schlagantriebsmodul elektrisch und hydraulisch miteinander in Reihe verschaltet. Bei einer elektrischen und hydraulischen Reihenschaltung mehrerer Schlagantriebsmodule ist die Stromstärke durch alle Schlagantriebsmodule gleich, jedoch addieren sich die Druckbeiträge der Schlagantriebsmodule, das heißt bei einem angenommenen Zieldruckwert kann dies entweder mit einem Schlagantriebmodul und hoher Stromstärke oder mit mehreren elektrisch und hydraulisch in Reihe verschalteten Schlagantriebsmodulen mit einer durch die Anzahl der Schlagantriebsmodule geteilten Stromstärke erreicht werden. Folglich kann mittels elektrisch und hydraulisch in Reihe verschalteten Schlagantriebsmodulen die Stromstärke und damit vorteilhaft die Verlustleistung und/oder ein Leitungsquerschnitt und/oder ein Bauteilstress und/oder dergleichen reduziert werden.

In einer weiteren vorteilhaften Ausgestaltung wird vorgeschlagen, dass das Schlagantriebsmodul und das weitere Schlagantriebsmodul miteinander hydraulisch parallel verschaltet sind. Hierdurch können vorteilhaft größere Schlagimpulse erzeugt werden, da sich ein Durchfluss des Fluids und damit eine Amplitude der Geschwindigkeit des Fluids erhöht. Denkbar ist auch, dass die Schlagantriebseinheit eine Kombination von hydraulisch miteinander in Reihe und hydraulisch miteinander parallel verschalteten Schlagantriebsmodulen aufweist. Beispielsweise könnte die Schlagantriebseinheit das Schlagantriebsmodul und das weitere Schlagantriebsmodul, welche hydraulisch parallel miteinander verschaltet sein könnten, ein zusätzliches Schlagantriebsmodul, welches hydraulisch in Reihe mit dem Schlagantriebsmodul verschaltet sein könnte und ein weiteres zusätzliches Schlagantriebsmodul, welches mit dem weiteren Schlagantriebsmodul hydraulisch in Reihe verschaltet sein könnte, aufweisen. Es sind viele weitere, dem Fachmann als sinnvoll erscheinende Arten zur hydraulischen Verschaltung mehrerer Schlagantriebmodule der Schlagantriebseinheit miteinander denkbar.

Das Fluid könnte beispielsweise als eine Lösung mit freien Ladungsträgen, beispielsweise als eine Salzwasserlösung oder dergleichen ausgebildet sein. In einer vorteilhaften Ausgestaltung wird jedoch vorgeschlagen, dass das Fluid als ein Metall und/oder als eine Metalllegierung ausgebildet ist, welche/s unter Standardbedingungen flüssig, und/oder zumindest im Wesentlichen inkompressibel ist. Durch eine derartige Ausgestaltung kann vorteilhaft eine besonders effiziente Erzeugung und Übertragung der Schlagkraft ermöglicht werden. Vorzugsweise ist das als Metall und/oder als Metalllegierung ausgebildete Fluid sowohl unter Standardbedingungen flüssig als auch zumindest im Wesentlichen inkompressibel. Unter "Standardbedingungen" sollen hierbei eine Temperatur von 0°C und ein Umgebungsdruck von 1,01325 bar verstanden werden. Unter "zumindest im Wesentlichen inkompressibel" soll in diesem Zusammenhang verstanden werden, dass das als Metall und/oder Metalllegierung ausgebildete Fluid ein Kompressionsmodul von zumindest 5 GPa, vorteilhaft von zumindest 10 GPa, vorzugsweise von zumindest 15 GPa, bevorzugt von zumindest 20 GPa und besonders bevorzugt von zumindest 25 GPa aufweist. Bei dem als Metall und/oder als Metalllegierung ausgebildeten Fluid könnte es sich beispielsweise um Quecksilber oder um eine Quecksilberlegierung, beispielsweise die eutektische Quecksilber-Thallium-Legierung mit eine Massengehalt von 8,5% Thallium handeln. Vorzugsweise ist das Fluid als ein ungiftiges Metall und/oder als eine ungiftige Metalllegierung ausgebildet, welche/s unter Standardbedingungen flüssig, und/oder zumindest im Wesentlichen inkompressibel ist. Geeignete ungiftige Metalllegierungen könnten beispielsweise Legierungen aus Alkalimetallen, insbesondere Legierungen aus Natrium und Kalium, welche bei einem Kaliummassengehalt zwischen 45 % und 89 % unter Standardbedingungen flüssig sind und bei Massengehalten von 22 % Natrium und 78 % Kalium ein Eutektikum ausbilden, sein. Bevorzugt ist das Fluid als eine ungiftige, im Wesentlichen inkompressible und unter Standardbedingungen flüssige Metalllegierung aus Gallium, Indium und Zinn, welche unter dem Markennamen Galinstan erhältlich ist und besonders bevorzugt in einer eutektischen Zusammensetzung mit Massengehalten von 68,5 % Gallium, 21,5 % Indium und 10 % Zinn vorliegt, ausgebildet. Alternativ könnte das Fluid auch als ein/eine weitere/s, dem Fachmann als sinnvoll erscheinende/s unter Standardbedingungen flüssiges, und/oder zumindest im Wesentlichen inkompressible/s Metall und/oder Metalllegierung ausgebildet sein. Vorzugsweise weist das Fluid eine hohe Wärmeleitfähigkeit auf. Vorzugsweise ist das Fluid, neben dem Erzeugen und Übertragen der Schlagkraft, auch zu einer Verteilung und/oder Ableitung von in einem Betriebszustand der Werkzeugmaschine auftretender Wärme vorgesehen. Beispielsweise kann das Fluid zu einer Verteilung und/oder Ableitung von Wärme, welche in dem Betriebszustand aufgrund von elektrischer Verlustleistung elektrischer und/oder elektronischer Komponenten der Werkzeugmaschine und/oder aufgrund von Reibungsenergie zwischen mechanisch bewegten Komponenten der Werkzeugmaschine, beispielsweise Wellen und dergleichen, entsteht, vorgesehen sein. Die Werkzeugmaschine kann hierzu entsprechende Kühlkanäle, mittels derer das Fluid in dem Betriebszustand an den zu kühlenden Komponenten der Werkzeugmaschine vorbei und/oder durch die zu kühlenden Komponenten hindurch geleitet wird, aufweisen. Insbesondere weist das Fluid eine Wärmeleitfähigkeit von zumindest 5 W/mK, vorteilhaft eine Wärmeleitfähigkeit von zumindest 10 W/mK, besonders vorteilhaft eine Wärmeleitfähigkeit von zumindest 15 W/mK, vorzugsweise eine Wärmeleitfähigkeit von zumindest 20 W/mK und besonders bevorzugt eine Wärmeleitfähigkeit von zumindest 25 W/mK, auf.

Das Schlagantriebsmodul und/oder das weitere Schlagantriebsmodul könnten dazu vorgesehen sein, die Schlagkraft über das Fluid direkt auf das Werkzeug zu übertragen. In einer vorteilhaften Ausgestaltung wird jedoch vorgeschlagen, dass die Schlagantriebseinheit eine Übertragungseinheit mit zumindest einem Übertragungselement, insbesondere einem Kolben und/oder Balg, zur Übertragung der Schlagkraft von dem Schlagantriebsmodul auf das Werkzeug aufweist. Hierdurch kann vorteilhaft eine gezielte Übertragung der Schlagkraft verbessert werden. Das Schlagantriebsmodul und/oder das weitere Schlagantriebsmodul sind hydraulisch, entweder direkt oder indirekt über zumindest ein weiteres Übertragungselement der Übertragungseinheit, mit dem Übertragungselement der Übertragungseinheit verbunden. Das Schlagantriebsmodul und/oder das weitere Schlagantriebsmodul könnten außerhalb der Übertragungseinheit angeordnet sein. Denkbar ist auch, dass das Schlagantriebsmodul und/oder das weitere Schlagantriebsmodul innerhalb der Übertragungseinheit, insbesondere in dem Übertragungselement angeordnet sind.

Zudem wird vorzugsweise vorgeschlagen, dass die Werkzeugmaschine ein Sensormodul zur Erfassung zumindest eines aktuellen Strömungsparameters des Fluids basierend auf dem magnethydrodynamischen Effekt aufweist, wobei das Sensormodul zumindest im Wesentlichen identisch zu dem Schlagantriebsmodul ausgebildet und mit diesem hydraulisch verbunden ist. Durch eine derartige Ausgestaltung kann vorteilhaft eine Selbstsensierung ermöglicht werden. Bei dem aktuellen Strömungsparameter des Fluids kann es sich, ohne darauf beschränkt zu sein, beispielsweise um die aktuelle Strömungsrichtung des Fluids in dem Strömungskanal und/oder eine Strömungsgeschwindigkeit des Fluids in dem Strömungskanal handeln. Vorzugsweise ist die Steuer- und/oder Regeleinheit mit Sensorelektroden des Sensormoduls mittelbar oder unmittelbar verbunden. Vorzugsweise ist die Steuer- und/oder Regeleinheit dazu vorgesehen, basierend auf Daten des Sensormoduls einen elektrischen Ansteuerverlauf anzupassen. Vorzugsweise ist die Steuer- und/oder Regeleinheit dazu vorgesehen, basierend auf Daten des Sensormoduls ein Schlagverhalten der Schlagantriebseinheit elektronisch zu regeln und bevorzugt zu optimieren.

Des Weiteren wird vorzugsweise vorgeschlagen, dass die Werkzeugmaschine eine mit dem Sensormodul verbundene Analyseeinheit zur Erfassung zumindest eines Betriebsparameters basierend auf Daten des Sensormoduls aufweist. Durch eine derartige Ausgestaltung kann vorteilhaft ein Bedienkomfort verbessert werden. Die Analyseeinheit weist zumindest eine Recheneinheit, welche beispielsweise als ein Mikroprozessor ausgebildet sein kann, zur Analyse der Daten des Sensormoduls auf. Die Analyseeinheit ist vorzugsweise mit der Steuer- und/oder Regeleinheit verbunden oder Teil der Steuer- und/oder Regeleinheit. Vorzugsweise ist die Steuer- und/oder Regeleinheit dazu vorgesehen, die Schlagantriebseinheit basierend auf den zumindest einen mittels der Analyseeinheit erfassten Betriebsparameter zu steuern und/oder zu regeln. Bei dem Betriebsparameter kann es sich, ohne darauf beschränkt zu sein, beispielsweise um einen Betrag der in dem Schlagantriebsmodul erzeugten Schlagkraft und/oder eine Amplitude eines Schlagimpulses und/oder einen Betrag einer Schlagfrequenz und/oder dergleichen handeln. Denkbar ist, dass die Analyseeinheit zu einer weiterführenden Analyse von Rückwirkungen des Werkzeugs auf das Sensormodul und zur Ermittlung zumindest eines weiterführenden Betriebsparameters vorgesehen ist.

Beispielsweise könnte die Analyseeinheit zu einer Frequenzanalyse des Werkzeugs und zur Ermittlung eines weiterführenden Betriebsparameters, beispielsweise einer Beschaffenheit und/oder eines Materials eines mittels der Werkzeugmaschine zu bearbeitenden Werkstücks und/oder eines Typs eines verwendeten Werkzeugs und/oder eines Verschleißes des Werkzeugs und/oder einer Änderung der Beschaffenheit und/oder des Materials des zu bearbeitenden Werkstücks während eines Bohr und/oder Schlagvorgangs, beispielsweise ein Auftreffen auf Armierungsstahl einer Betonwand, vorgesehen sein. Hierdurch können vorteilhaft die Ansteuerparameter der Schlagantriebseinheit durch die Steuer- und/oder Regeleinheit automatisch an eine aktuelle Betriebssituation angepasst werden. Zudem ist denkbar, dass die Werkzeugmaschine eine Ausgabeeinheit, beispielsweise ein Display oder dergleichen, zur Ausgabe von durch die Analyseeinheit ermittelter Betriebsparameter und/oder weiterführender Betriebsparameter an einen Nutzer aufweist. Beispielsweise könnten dem Nutzer in dem Betriebszustand der Werkzeugmaschine über die Ausgebeinheit, basierend auf den Analysen der Analyseeinheit, Hinweise auf nicht optimal eingestellte Betriebsparameter, z.B. eine zu hohe oder zu geringe Schlagkraft, und/oder auf die Verwendung eines untauglichen und/oder verschlissenen Werkzeugs gegeben werden. Die Erfindung geht ferner aus von einem Verfahren zum Betrieb einer Werkzeugmaschine, insbesondere nach einer der vorhergehend beschriebenen Ausgestaltungen, wobei eine Schlagkraft erzeugt und auf ein Werkzeug der Werkzeugmaschine übertragen wird.

Es wird erfindungsgemäß vorgeschlagen, dass die Schlagkraft basierend auf dem magnethydrodynamischen Effekt erzeugt und über ein Fluid auf das Werkzeug übertragen wird. Durch ein derartiges Verfahren kann vorteilhaft ein besonders effizienter, verschleißarmer und leiser Betrieb der Werkzeugmaschine ermöglicht werden.

### Zeichnung

Weitere Vorteile ergeben sich aus der folgenden Zeichnungsbeschreibung. In der Zeichnung sind sieben Ausführungsbeispiele der Erfindung dargestellt. Die Zeichnung, die Beschreibung und die Ansprüche enthalten zahlreiche Merkmale in Kombination.

Es zeigen:
- Fig. 1: eine Werkzeugmaschine mit einem Werkzeug und mit einer Schlagvorrichtung in einer schematischen Darstellung,
- Fig. 2: eine schematische Seitenansicht und eine schematische Schnittansicht eines Schlagantriebsmoduls einer Schlagantriebseinheit der Schlagvorrichtung,
- Fig. 3: eine schematische Ansicht der Schlagantriebseinheit mit dem Schlagantriebsmodul, einem weiteren Schlagbohrmodul und einer Steuer- und/oder Regeleinheit,
- Fig. 4: zwei schematische Diagramme zur Darstellung einer Wirkungsweise der Schlagantriebseinheit,
- Fig. 5: ein schematisches Verfahrensfließbild eines Verfahrens zum Betrieb der Werkzeugmaschine,
- Fig. 6: ein weiteres Ausführungsbeispiel einer Schlagvorrichtung einer Werkzeugmaschine, mit einer Schlagantriebseinheit in einer schematischen Darstellung,
- Fig. 7: ein weiteres Ausführungsbeispiel einer Schlagvorrichtung einer Werkzeugmaschine, mit einer Schlagantriebseinheit in einer schematischen Darstellung,
- Fig. 8: ein weiteres Ausführungsbeispiel einer Schlagvorrichtung einer Werkzeugmaschine, mit einer Schlagantriebseinheit in einer schematischen Darstellung,
- Fig. 9: ein weiteres Ausführungsbeispiel einer Schlagvorrichtung einer Werkzeugmaschine, mit einer Schlagantriebseinheit in einer schematischen Darstellung,
- Fig. 10: ein weiteres Ausführungsbeispiel einer Schlagvorrichtung einer Werkzeugmaschine, mit einer Schlagantriebseinheit in einer schematischen Darstellung und
- Fig. 11: ein weiteres Ausführungsbeispiel einer Schlagvorrichtung einer Werkzeugmaschine, mit einer Schlagantriebseinheit in einer schematischen Darstellung.

### Beschreibung der Ausführungsbeispiele

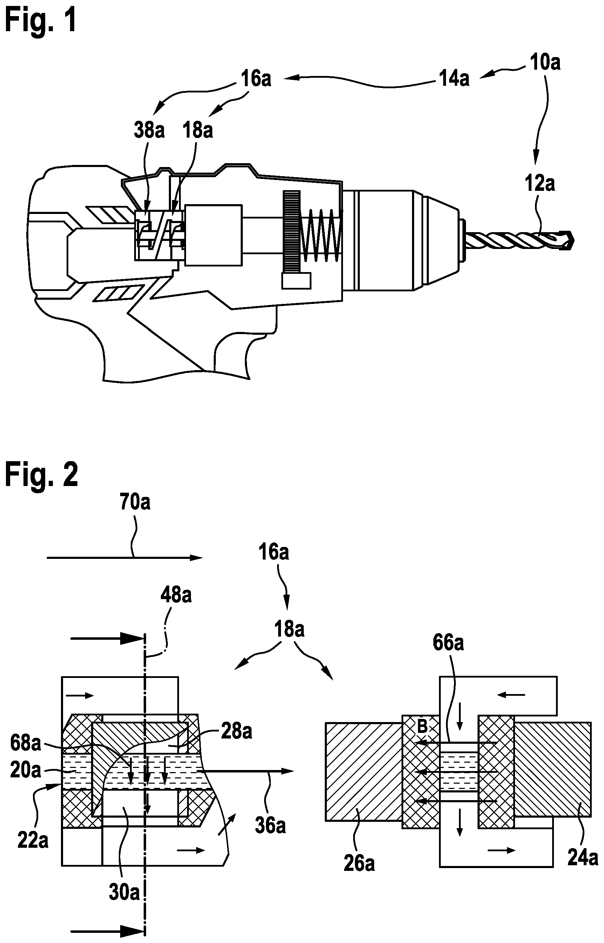

Figur 1 zeigt eine Werkzeugmaschine 10a mit einem Werkzeug 12a und mit einer Schlagvorrichtung 14a in einer schematischen Darstellung. In dem vorliegenden Ausführungsbeispiel ist die Werkzeugmaschine 10a als eine Schlagbohrmaschine ausgebildet und das Werkzeug 12a ist beispielsweise als ein Schlagbohrer mit Schneidkante ausgebildet. Grundsätzlich könnte die Werkzeugmaschine 10a jedoch auch als eine andere Art von Werkzeugmaschine, beispielsweise als ein Bohrhammer (nicht dargestellt) oder als ein Abbruchhammer (nicht dargestellt) oder dergleichen ausgebildet sein. Ferner kann das Werkzeug 12a als ein anderes Bohr- und/oder Schlagwerkzeug, beispielsweise als ein Flachmeißel ausgebildet sein. Die Werkzeugmaschine 10a kann dazu vorgesehen sein das Werkzeug 12a in einem Schlagbohrbetrieb anzutreiben, das heißt sowohl in eine Rotationsbewegung um die eigene Achse als auch in eine Schlagbewegung in axialer Richtung zu versetzen. Alternativ kann die Werkzeugmaschine 10a auch dazu vorgesehen sein das Werkzeug in einem Schlagbetrieb anzutreiben, wobei sich das Werkzeug 12a nicht um die eigene Achse dreht und nur zu einer Schlagbewegung in axialer Richtung angetrieben wird.

Die Schlagvorrichtung 14a weist eine Schlagantriebseinheit 16a zur Erzeugung und Übertragung einer Schlagkraft auf das Werkzeug 12a auf. Die Schlagantriebseinheit 16a weist zumindest ein Schlagantriebsmodul 18a zur Erzeugung der Schlagkraft basierend auf dem magnethydrodynamischen Effekt und zur Übertragung der Schlagkraft über ein Fluid 20a (vgl. Figur 2) auf das Werkzeug 12a auf.

Figur 2 zeigt das Schlagantriebsmodul 18a der Schlagantriebseinheit 16a in einer schematischen Seitenansicht und in einer schematischen Schnittansicht entlang einer Schnittkante 48a. Das Schlagantriebsmodul 18a weist zumindest einen Strömungskanal 22a für das Fluid 20a auf. Die Schnittkante 46a verläuft senkrecht zu einer Haupterstreckungsrichtung 70a des Strömungskanals 22a. Das Schlagantriebsmodul 18a weist ferner zumindest zwei außerhalb des Strömungskanals 22a angeordnete Magnetelemente 24a, 26a auf. Das Schlagantriebsmodul 18a weist außerdem zumindest zwei mit dem Strömungskanal 22a verbundene Steuerelektroden 28a, 30a auf. Die Steuerelektroden 28a, 30a sind in eine Wandung des Strömungskanals 22a eingebettet und zwar derart, dass sie bündig mit einer Innenseite der Wandung abschließen, um einen Strömungswiderstand des Fluids 20a zu minimieren. Die Magnetelemente 24a, 26a und die Steuerelektroden 28a, 30a sind dazu vorgesehen, eine Lorentzkraft in dem Fluid 20a zur Erzeugung der Schlagkraft zu bewirken. Vorliegend sind die Magnetelemente 24a, 26a des Schlagantriebmoduls 18a als Permanentmagnete ausgebildet, wobei das Magnetelement 24a eine positive magnetische Polarität und das Magnetelement 26a eine negative magnetische Polarität aufweist, sodass zwischen den Magnetelementen 24a, 26a ein magnetisches Feld 66a besteht, welches senkrecht zu der Haupterstreckungsrichtung 70a des Strömungskanals 22a ausgerichtet ist. Liegt in einem Betriebszustand der Schlagantriebseinheit 16a eine elektrische Spannung an den Steuerelektroden 28a, 30a an, entsteht ein elektrisches Feld 68a, welches im Wesentlichen senkrecht zu dem magnetischen Feld 66a ausgerichtet ist. Über freie Ladungsträger in dem Fluid 20a entsteht ein Stromfluss von der Steuerelektrode 28a zu der Steuerelektrode 30a. Aufgrund der Feldkräfte des magnetischen Felds 66a und des elektrischen Felds 68a wirkt eine Lorentzkraft auf die Ladungsträger in dem Fluid 20a und das Fluid 20a wird in Strömungsrichtung 36a, welche der Richtung der Lorentzkraft entspricht, in dem Strömungskanal 22a in Bewegung versetzt.

Das Fluid 20a ist als ein Metall und/oder als eine Metalllegierung ausgebildet, welche/s unter Standardbedingungen flüssig, und/oder zumindest im Wesentlichen inkompressibel ist. Vorliegend ist das Fluid 20a aus einer Metalllegierung ausgebildet, welche unter Standardbedingungen, bei einer Temperatur von 0°C und einen Umgebungsdruck von 1,01325 bar, flüssig und zumindest im Wesentlichen inkompressibel ist, das heißt ein Kompressionsmodul von zumindest 5 GPa aufweist. Bei dem Fluid handelt es sich vorliegend um eine Metalllegierung aus Gallium, Indium und Zinn, mit Massengehalten von 68,5 % Gallium, 21,5 % Indium und 10 % Zinn, welche einen Schmelzpunkt von -19°C aufweist und ungiftig ist.

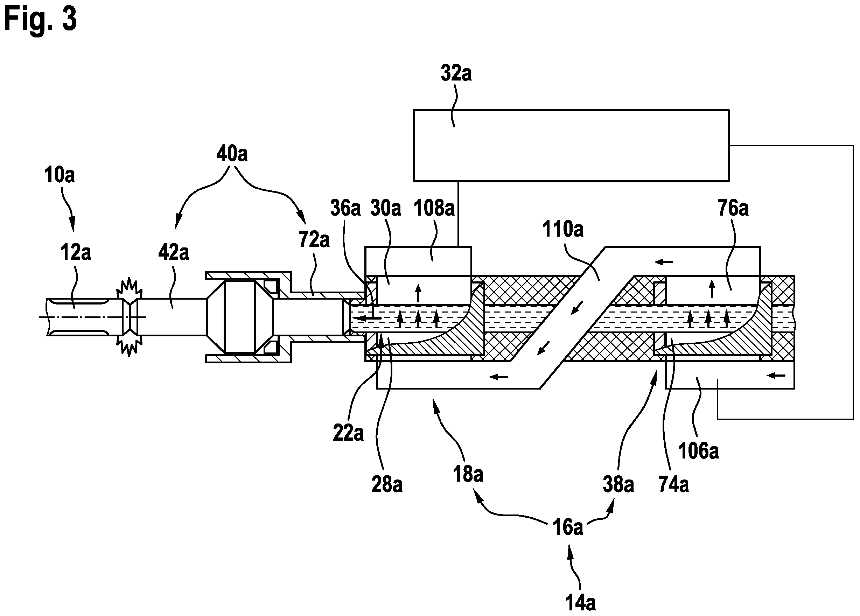

Figur 3 zeigt eine schematische Ansicht der Schlagantriebseinheit 16a. In dem vorliegenden Ausführungsbeispiel weist die Schlagantriebseinheit 16a das Schlagantriebsmodul 18a und zumindest ein weiteres Schlagantriebsmodul 38a auf. Das weitere Schlagantriebsmodul 38a ist im Wesentlichen identisch zu dem Schlagantriebsmodul 18a ausgebildet. Das Schlagantriebsmodul 18a und das weitere Schlagantriebsmodul 38a sind hydraulisch so miteinander verschaltet, dass sich die in den jeweiligen Schlagantriebsmodulen 18a, 38a erzeugten Kräfte zu der Schlagkraft addieren. Vorliegend sind das Schlagantriebsmodul 18a und das weitere Schlagantriebsmodul 38a miteinander hydraulisch in Reihe verschaltet, und zwar über den Strömungskanal 22a, welcher das Schlagantriebsmodul 18a mit dem weiteren Schlagantriebsmodul 38a hydraulisch verbindet.

Das Schlagantriebsmodul 18a und das weitere Schlagantriebsmodul 38a sind elektrisch in Reihe verschaltet. Die Steuerelektrode 28a des Schlagantriebsmoduls 18a und eine weitere Steuerelektrode 76a des weiteren Schlagantriebsmoduls 38a sind hierzu elektrisch leitend über eine Verbindung 110a miteinander verbunden.

Die Schlagantriebseinheit 16a weist eine Übertragungseinheit 40a mit zumindest einem Übertragungselement 42a zur Übertragung der Schlagkraft von dem Schlagantriebsmodul 18a auf das Werkzeug 12a auf. Das Übertragungselement 42a ist als ein Schlagbolzen ausgebildet, welcher in einem Hammerrohr 72a der Übertragungseinheit 40a gelagert ist.

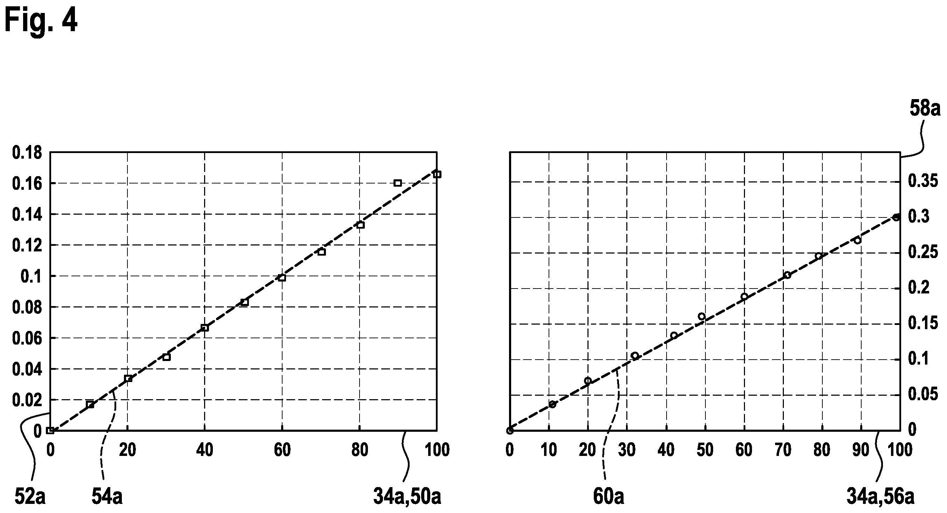

Die Werkzeugmaschine 10a weist eine mit den Steuerelektroden 28a, 30a des Schlagantriebsmoduls 18a verbundene Steuer- und/oder Regeleinheit 32a zur Steuerung und/oder Regelung der Schlagantriebseinheit 16a mittels eines Steuerstroms 34a (vgl. Figur 4) auf. Vorliegend ist die Steuer- und/oder Regeleinheit 32a indirekt mit den Steuerelektroden 28a, 30a des Schlagantriebsmoduls 18a sowie zwei weiteren Steuerelektroden 74a, 76a des weiteren Schlagantriebsmoduls 38a verbunden und zwar über zwei Anschlusselektroden 106a, 108a der Schlagantriebseinheit 16a. Die Steuer- und/oder Regeleinheit 32a ist zur Steuerung des Schlagantriebsmoduls 18a und des weiteren Schlagantriebsmoduls 38a mittels des Steuerstroms 34a vorgesehen. In dem Betriebszustand der Schlagantriebseinheit 16a fliest der Steuerstrom 34a von der Steuer- und/oder Regeleinheit 16a über die Anschlusselektrode 106a zu der weiteren Steuerelektrode 74a des weiteren Schlagantriebmoduls 38a. Zwischen den weiteren Steuerelektroden 74a, 76a des weiteren Schlagantriebsmoduls 38a entsteht aufgrund der freien Ladungsträger in dem Fluid 20a ein weiteres elektrisches Feld (nicht mit einem Bezugszeichen versehen). Der Steuerstrom 34a fließt aufgrund des weiteren elektrischen Felds von der weiteren Steuerelektrode 76a über die Verbindung 110a zu der Steuerelektrode 28a des Schlagantriebmoduls 18a. Zwischen den Steuerelektroden 28a, 30a des Schlagantriebmoduls 18a entsteht aufgrund der freien Ladungsträger in dem Fluid 20a das elektrische Feld 68a (vgl. Figur 2) und der Steuerstrom 34a fließt aufgrund des elektrischen Felds 68a von der Steuerelektrode 30a zu der Anschlusselektrode 108a und zurück zur Steuer- und/oder Regeleinheit 32a.

Die Steuer- und/oder Regeleinheit 32a ist dazu vorgesehen, das Schlagantriebsmodul 18a mit einem gepulsten Steuerstrom 34a anzusteuern, um Druckwellen in dem Fluid 20a zu erzeugen. Vorliegend ist die Steuer- und/oder Regeleinheit 32a dazu vorgesehen, das Schlagantriebsmodul 18a und das weitere Schlagantriebsmodul 38a mit einem gepulsten Steuerstrom 34a anzusteuern, um Druckwellen in dem Fluid 20a zu erzeugen. Zu der Ansteuerung des Schlagantriebsmoduls 18a und des einen weiteren Schlagantriebsmoduls 38a kann die Steuer- und/oder Regeleinheit 32a zumindest ein elektrisches Ansteuermuster heranziehen, wobei der gepulste Steuerstrom 34a des elektrischen Ansteuermusters beispielsweise einen sinusförmigen oder rechteckförmigen zeitlichen Verlauf aufweisen kann.

Der Strömungskanal 22a des Schlagantriebsmoduls 18a mündet in dem Hammerrohr 72a der Übertragungseinheit 40a. In dem Betriebszustand der Schlagantriebseinheit 16a wird das als Schlagbolzen ausgebildete Übertragungselement 42a durch in Strömungsrichtung 36a wirkenden Druck des Fluids 20a in dem Hammerrohr 72a nach vorne gedrückt und überträgt dabei die Schlagkraft von dem Schlagantriebsmodul 18a auf das Werkzeug 12a.

Figur 4 zeigt zwei schematische Diagramme zur Darstellung einer Wirkungsweise der Schlagantriebseinheit 16a. Auf einer Abszisse 50a eines linken Diagramms der Figur 4 ist eine Stromstärke des Steuerstroms 34a in Ampere aufgetragen. Auf einer Ordinate 52a des linken Diagramms ist ein Druck des Fluids 20a in dem Strömungskanal 22a in bar aufgetragen. Eine Gerade 54a, welche durch verschiedene Messpunkte bei unterschiedlichen Stromstärken verläuft, zeigt einen im Wesentlichen linearen Zusammenhang zwischen der Stromstärke des Steuerstroms 34a und dem Druck des Fluids 20a in dem Strömungskanal 22a. Auf einer Abszisse 56a eines rechten Diagramms der Figur 4 ist die Stromstärke des Steuerstroms 34a in Ampere aufgetragen. Auf einer Ordinate 58a des rechten Diagramms ist eine Fließrate des Fluids 20a in dem Strömungskanal 22a in Kubikzentimetern pro Sekunde aufgetragen. Eine Messreihe mit Messwerten, durch welche eine Gerade 60a gelegt wurde, bezieht sich auf die in Figur 2 gezeigte Konfiguration der Schlagantriebseinheit 16a mit dem Schlagantriebsmodul 18a, welches hydraulisch in Reihe mit dem weiteren Schlagantriebsmodul 38a verschaltetet ist, und zeigt einen im Wesentlichen linearen Zusammenhang zwischen der Stromstärke des Steuerstroms 34a und der Fließrate des Fluids 20a.

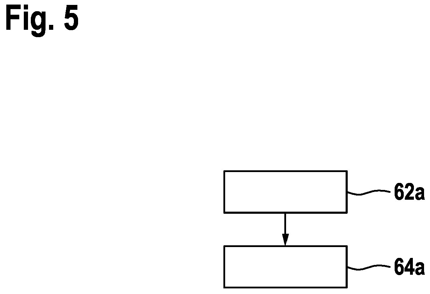

Figur 5 zeigt ein schematisches Verfahrensfließbild eines Verfahrens zum Betrieb der Werkzeugmaschine 10a. In dem Verfahren wird eine Schlagkraft erzeugt und auf das Werkzeug 12a der Werkzeugmaschine 10a übertragen. Das Verfahren umfasst zumindest zwei Verfahrensschritte 62a, 64a. In einem ersten Verfahrensschritt 62a des Verfahrens wird die Schlagkraft basierend auf dem magnethydrodynamischen Effekt erzeugt. In einem zweiten Verfahrensschritt 64a des Verfahrens wird die Schlagkraft über das Fluid 20a auf das Werkzeug 12a übertragen.

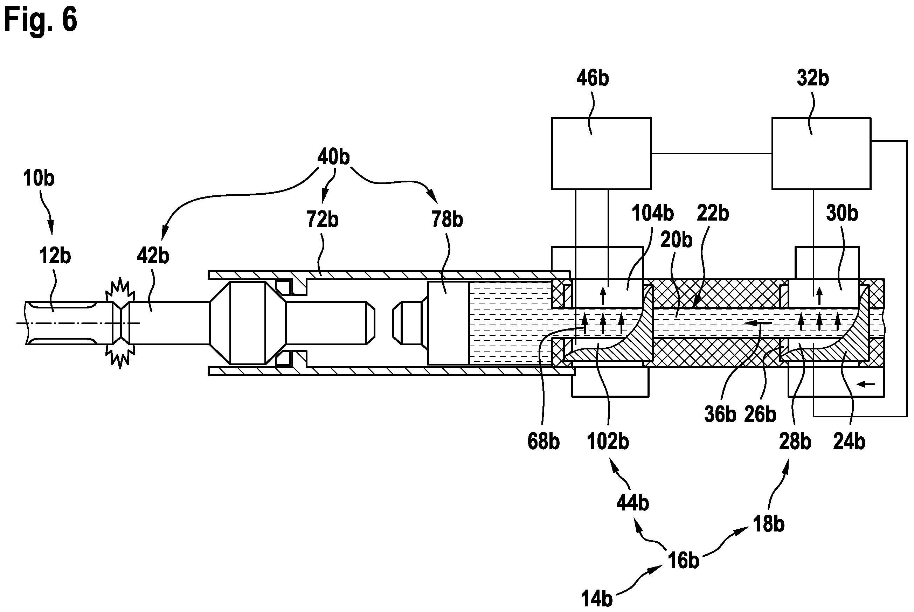

In den Figuren 6 bis 11 sind sechs weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 5, verwiesen werden kann. Zur Unterscheidung der Ausführungsbeispiele ist der Buchstabe a den Bezugszeichen des Ausführungsbeispiels in den Figuren 1 bis 5 nachgestellt. In den Ausführungsbeispielen der Figuren 6 bis 11 ist der Buchstabe a durch die Buchstaben b bis g ersetzt.

Figur 6 zeigt ein weiteres Ausführungsbeispiel einer Schlagvorrichtung 14b einer Werkzeugmaschine 10b (hier nicht dargestellt, vgl. Figur 1), welche beispielsweise als Schlagbohrmaschine oder als Bohrhammer ausgebildet sein kann.

Analog zu dem vorhergehenden Ausführungsbeispiel weist die Schlagvorrichtung 14b eine Schlagantriebseinheit 16b zur Erzeugung und Übertragung einer Schlagkraft auf ein Werkzeug 12b der Werkzeugmaschine 10b auf. Die Schlagantriebseinheit 16b weist zumindest ein Schlagantriebsmodul 18b zur Erzeugung der Schlagkraft basierend auf dem magnethydrodynamischen Effekt und zur Übertragung der Schlagkraft über ein Fluid 20b auf das Werkzeug 12b auf.

Im Unterschied zu dem vorhergehenden Ausführungsbeispiel weist die Schlagantriebseinheit 16b ein Sensormodul 44b auf. Das Sensormodul 44b ist zur Erfassung zumindest eines aktuellen Strömungsparameters des Fluids 20b basierend auf dem magnethydrodynamischen Effekt vorgesehen. Bei dem aktuellen Strömungsparameter des Fluids 20b kann es sich beispielsweise um eine aktuelle Strömungsrichtung 36b des Fluids 20b und/oder eine Strömungsgeschwindigkeit des Fluids 20b handeln. Das Sensormodul 44b ist zumindest im Wesentlichen identisch zu dem Schlagantriebsmodul 18b ausgebildet und mit diesem hydraulisch verbunden, und zwar über einen Strömungskanal 22b des Schlagantriebsmoduls 18b.

Die Werkzeugmaschine 10b weist eine mit dem Sensormodul 44b verbundene Analyseeinheit 46b zur Erfassung zumindest eines Betriebsparameters basierend auf Daten des Sensormoduls 44b auf. Die Analyseeinheit 46b ist mit zwei Sensorelektroden 102b, 104b des Sensormoduls 44b verbunden.

Die Werkzeugmaschine 10b weist eine mit Steuerelektroden 28b, 30b des Schlagantriebsmoduls 18b verbundene Steuer- und/oder Regeleinheit 32b zur Steuerung und/oder Regelung der Schlagantriebseinheit 16b mittels eines Steuerstroms (nicht dargestellt) auf. Im Unterschied zu dem vorhergehenden Ausführungsbeispiel ist die Steuer- und/oder Regeleinheit 32b direkt mit den Steuerelektroden 28b, 30b des Schlagantriebsmoduls 18b verbunden und es besteht keine elektrisch leitende Verbindung zwischen dem Schlagantriebsmodul 18b und dem Sensormodul 44b.

In einem Betriebszustand der Schlagantriebseinheit 16b wird das Fluid 20b in dem Schlagantriebsmodul 18b basierend auf dem magnethydrodynamischen Effekt in Strömungsrichtung 36b in Bewegung versetzt und strömt von dem Schlagantriebsmodul 18b über den Strömungskanal 22b in das Sensormodul 44b. Zwischen den Sensorelektroden 102b, 104b des Sensormoduls 44b entsteht beim Durchströmen des Fluids 20b aufgrund der freien Ladungsträger in dem Fluid 20b ein elektrisches Feld 68b, welches von der Analyseeinheit 46b erfasst und analysiert wird. Die Analyseeinheit 46b bestimmt aus den Daten des Sensormoduls 44b zumindest einen Betriebsparameter, beispielsweise einen Betrag der in dem Schlagantriebsmodul 18b erzeugten Schlagkraft und/oder einen Betrag einer Schlagfrequenz und/oder dergleichen.

Die Schlagantriebseinheit 16b weist eine Übertragungseinheit 40b mit zumindest einen Übertragungselement 42b zur Übertragung der Schlagkraft von dem Schlagantriebsmodul 18b auf das Werkzeug 12b auf. Das Übertragungselement 42b ist als ein Schlagbolzen ausgebildet, welcher in einem Hammerrohr 72b der Übertragungseinheit 40b gelagert ist. Im Unterschied zu dem vorhergehenden Ausführungsbeispiel ist das Übertragungselement 42b zu einer mittelbaren Übertragung der Schlagkraft von dem Schlagantriebsmodul 18b auf das Werkzeug 12b vorgesehen. Ferner weist die Übertragungseinheit 40b im Unterschied zu dem vorhergehenden Ausführungsbeispiel ein erstes weiteres Übertragungselement 78b auf, welches ebenfalls in dem Hammerohr 72b angeordnet ist. Das erste weitere Übertragungselement 78b der Übertragungseinheit 40b ist als ein Schläger ausgebildet.

Der Strömungskanal 22b des Schlagantriebsmoduls 18b mündet in einem Hammerrohr 72b der Übertragungseinheit 40b.

In einem Betriebszustand der Schlagantriebseinheit 16b wird das als Schläger ausgebildete erste weitere Übertragungselement 78b durch in einer Strömungsrichtung 36b wirkenden Druck des Fluids 20b in dem Hammerrohr 72b nach vorne gedrückt und überträgt dabei die Schlagkraft auf das als Schlagbolzen ausgebildete Übertragungselement 42b und somit auf das Werkzeug 12b.

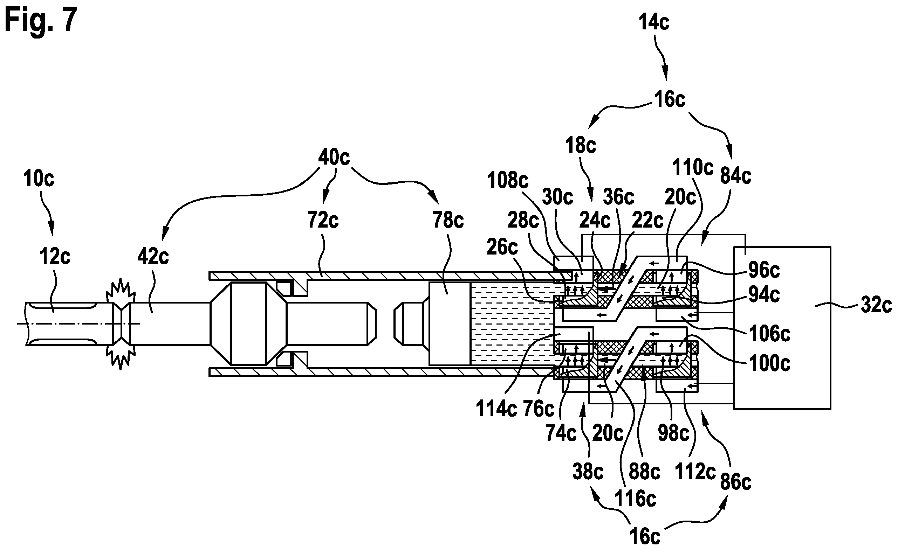

Figur 7 zeigt ein weiteres Ausführungsbeispiel einer Schlagvorrichtung 14c einer Werkzeugmaschine 10c (hier nicht dargestellt, vgl. Figur 1), welche beispielsweise als Schlagbohrmaschine oder als Bohrhammer ausgebildet sein kann.

Analog zu den vorhergehenden Ausführungsbeispielen weist die Schlagvorrichtung 14c eine Schlagantriebseinheit 16c zur Erzeugung und Übertragung einer Schlagkraft auf ein Werkzeug 12c der Werkzeugmaschine 10c auf. Die Schlagantriebseinheit 16c weist zumindest ein Schlagantriebsmodul 18c zur Erzeugung der Schlagkraft basierend auf dem magnethydrodynamischen Effekt und zur Übertragung der Schlagkraft über ein Fluid 20c auf das Werkzeug 12c auf.

Die Schlagantriebseinheit 16c weist zumindest ein weiteres Schlagantriebsmodul 38c auf, welches im Wesentlichen identisch zu dem Schlagantriebsmodul 18c ausgebildet ist. Das Schlagantriebsmodul 18c und das weitere Schlagantriebsmodul 38c sind hydraulisch so miteinander verschaltet, dass sich die Durchflüsse des Fluids (20c) addieren. Im Unterschied zu dem ersten Ausführungsbeispiel sind das Schlagantriebsmodul 18c und das weitere Schlagantriebsmodul 38c miteinander hydraulisch parallel verschaltet. Ferner weist die Schlagantriebseinheit 16c im Unterschied zu den vorhergehenden Ausführungsbeispielen zwei zusätzliche Schlagantriebsmodule 84c, 86c auf, welche jeweils im Wesentlichen identisch zu dem Schlagantriebsmodul 18c ausgebildet sind. Ein zusätzliche Schlagantriebsmodul 84c ist über einen Strömungskanal 22c hydraulisch in Reihe mit dem Schlagantriebsmodul 18c verschaltet, sodass sich die in dem zusätzlichen Schlagantriebsmodul 84c und die in dem Schlagantriebsmodul 18c mittels des magnethydrodynamischen Effekts erzeugten Kräfte addieren. Ein weiteres zusätzliches Schlagantriebsmodul 86c ist über einen weiteren Strömungskanal 88c hydraulisch in Reihe mit dem weiteren Schlagantriebsmodul 38c verschaltet, sodass sich die in dem weiteren zusätzlichen Schlagantriebsmodul 86c und die in dem weiteren Schlagantriebsmodul 38c mittels des magnethydrodynamischen Effekts erzeugten Kräfte addieren. Der Strömungskanal 22c und der weitere Strömungskanal 88c münden jeweils in einem Hammerohr 72 einer Übertragungseinheit 40c der Schlagantriebseinheit 16c, sodass sich die durch das zusätzliche Schlagantriebsmodul 84c und das Schlagantriebsmodul 18c in dem Strömungskanal 22c und die durch das weitere zusätzliche Schlagantriebsmodul 86c und das weitere Schlagantriebsmodul 38c in dem weiteren Strömungskanal 88c erzeugten Durchflüsse des Fluids 20c in dem Hammerrohr 72c addieren und dort die Schlagkraft auf ein erstes weiteres Übertragungselement 78c der Übertragungseinheit 40c, welches als ein Schläger ausgebildet ist, wirkt. Hinsichtlich der Funktion der Übertragungseinheit 40c zum Übertragen der Schlagkraft auf das Werkzeug kann ansonsten auf die obigen Ausführungen zu dem vorhergehenden Ausführungsbeispiel der Figur 6 verwiesen werden.

Die Werkzeugmaschine 10c weist eine mit Steuerelektroden 28c, 30c des Schlagantriebsmoduls 18c verbundene Steuer- und/oder Regeleinheit 32c zur Steuerung und/oder Regelung der Schlagantriebseinheit 16c mittels eines Steuerstroms (nicht dargestellt) auf. Die Steuer- und/oder Regeleinheit 32c ist indirekt mit den Steuerelektroden 28c, 30c des Schlagantriebsmoduls 18c verbunden und zwar über zwei Anschlusselektroden 106c, 108c der Schlagantriebseinheit 16c. Die Steuer- und/oder Regeleinheit 32c ist zur Steuerung des Schlagantriebsmoduls 18c, des weiteren Schlagantriebsmoduls 38c, des zusätzlichen Schlagantriebsmodul 84c sowie des weiteren zusätzlichen Schlagantriebsmoduls 86c mittels eines Steuerstroms (nicht mit einem Bezugszeichen versehen) vorgesehen. Das Schlagantriebsmodul 18c und das zusätzliche Schlagantriebsmodul 84c sind miteinander elektrisch in Reihe verschaltet und zwar über eine Verbindung 110c. Die Steuereinheit 32c ist über die Anschlusselektrode 106c mit einer zusätzliche Steuerelektrode 94c des zusätzlichen Schlagantriebsmoduls 84c verbunden. In einem Betriebszustand der Schlagantriebseinheit 16c fließt der Steuerstrom von der Steuer- und/oder Regeleinheit 32 über die Anschlusselektrode 106c zu der zusätzlichen Steuerelektrode 94c des zusätzlichen Schlagantriebsmoduls 84c. Zwischen der zusätzlichen Steuerelektrode 94c und einer zusätzlichen Steuerelektrode 96c entsteht aufgrund der freien Ladungsträger in dem Fluid 20c ein zusätzliches elektrisches Feld (nicht mit einem Bezugszeichen versehen). Der Steuerstrom fließt aufgrund des zusätzlichen elektrischen Felds von der zusätzlichen Steuerelektrode 96c über die Verbindung 110c zu der Steuerelektrode 28c des Schlagantriebmoduls 18c. Zwischen den Steuerelektroden 28c, 30c des Schlagantriebmoduls 18c entsteht aufgrund der freien Ladungsträger in dem Fluid 20c ein elektrisches Feld (nicht mit einem Bezugszeichen versehen) und der Steuerstrom fließt aufgrund des elektrischen Felds von der Steuerelektrode 30c zu der Anschlusselektrode 108c und zurück zur Steuer- und/oder Regeleinheit 32c. Die Steuer- und/oder Regeleinheit 32c ist indirekt mit weiteren Steuerelektroden 74c, 76c des weiteren Schlagantriebsmoduls 74c verbunden und zwar über zwei weitere Anschlusselektroden 112c, 114c der Schlagantriebseinheit 16c. Das weitere Schlagantriebsmodul 38c und das weitere zusätzliche Schlagantriebsmodul 86c sind miteinander elektrisch in Reihe verschaltet und zwar über eine weitere Verbindung 116c. Die Steuereinheit 32c ist über die weitere Anschlusselektrode 112c mit einer weiteren zusätzlichen Steuerelektrode 98c des weiteren zusätzlichen Schlagantriebsmoduls 86c verbunden. In dem Betriebszustand der Schlagantriebseinheit 16c fließt der Steuerstrom von der Steuer- und/oder Regeleinheit 32c über die weitere Anschlusselektrode 112c zu der weiteren zusätzlichen Steuerelektrode 98c des weiteren zusätzlichen Schlagantriebsmoduls 86c. Zwischen der weiteren zusätzlichen Steuerelektrode 98c und einer weiteren zusätzlichen Steuerelektrode 100c entsteht aufgrund der freien Ladungsträger in dem Fluid 20c ein weiteres zusätzliches elektrisches Feld (nicht mit einem Bezugszeichen versehen). Der Steuerstrom fließt aufgrund des weiteren zusätzlichen elektrischen Felds von der weiteren zusätzlichen Steuerelektrode 100c über die weitere Verbindung 116c zu der weiteren Steuerelektrode 74c des weiteren Schlagantriebmoduls 38c. Zwischen den weiteren Steuerelektroden 74c, 76c des weiteren Schlagantriebmoduls 38c entsteht aufgrund der freien Ladungsträger in dem Fluid 20c ein weiteres elektrische Feld (nicht mit einem Bezugszeichen versehen) und der Steuerstrom fließt aufgrund des weiteren elektrischen Felds von der weiteren Steuerelektrode 76c zu der Anschlusselektrode 114c und zurück zur Steuer- und/oder Regeleinheit 32c.

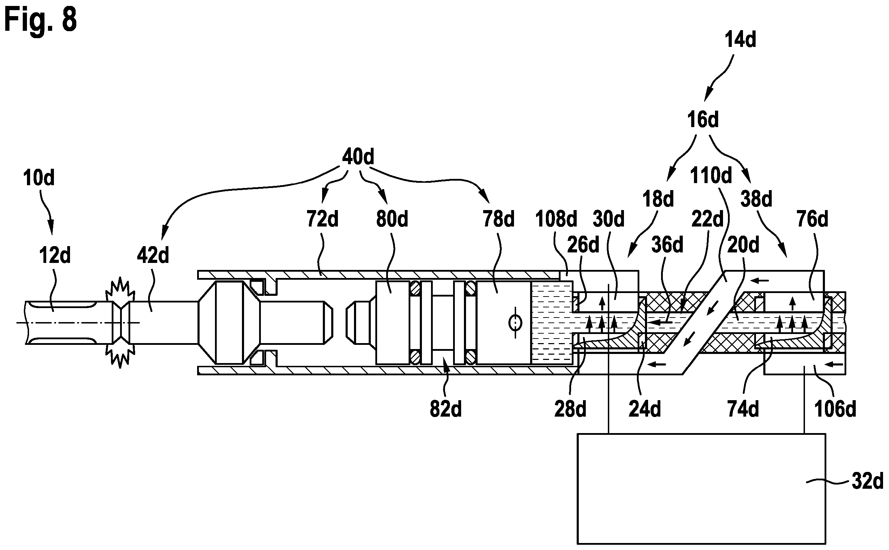

Figur 8 zeigt ein weiteres Ausführungsbeispiel einer Schlagvorrichtung 14d einer Werkzeugmaschine 10d (hier nicht dargestellt, vgl. Figur 1), welche beispielsweise als Schlagbohrmaschine oder als Bohrhammer ausgebildet sein kann.

Analog zu dem Ausführungsbeispiel der Figuren 1 bis 5 weist die Schlagvorrichtung 14d eine Schlagantriebseinheit 16d zur Erzeugung und Übertragung einer Schlagkraft auf ein Werkzeug 12d der Werkzeugmaschine 10d auf. Die Schlagantriebseinheit 16d weist zumindest ein Schlagantriebsmodul 18d zur Erzeugung der Schlagkraft basierend auf dem magnethydrodynamischen Effekt und zur Übertragung der Schlagkraft über ein Fluid 20d auf das Werkzeug 12d auf. Die Schlagantriebseinheit 16d weist zumindest ein weiteres Schlagantriebsmodul 38d auf, welches im Wesentlichen identisch zu dem Schlagantriebsmodul 18d ausgebildet und mit diesem über einen Strömungskanal 22d hydraulisch in Reihe so verschaltet ist, dass sich die in den jeweiligen Schlagantriebsmodulen 18d, 38d erzeugten Kräfte zu der Schlagkraft addieren.

Analog zu dem ersten Ausführungsbeispiel weist die Werkzeugmaschine 10d eine mit Steuerelektroden 28d, 30d des Schlagantriebsmoduls 18d verbundene Steuer- und/oder Regeleinheit 32d zur Steuerung und/oder Regelung der Schlagantriebseinheit 16d mittels eines Steuerstroms (nicht mit einem Bezugszeichen versehen) auf. Vorliegend ist die Steuer- und/oder Regeleinheit 32d indirekt über zwei Anschlusselektroden 106d, 108d mit den Steuerelektroden 28d, 30d und zwei weiteren Steuerelektroden 74d, 76d des weiteren Schlagantriebsmoduls 38d verbunden. Das Schlagantriebsmodul 18d und das weitere Schlagantriebsmodul 38d sind elektrisch in Reihe verschaltet. Die Steuerelektrode 28d des Schlagantriebsmoduls 18d und die weitere Steuerelektrode 76d des weiteren Schlagantriebsmoduls 38d sind hierzu elektrisch leitend über eine Verbindung 110d miteinander verbunden.

Die Schlagantriebseinheit 16d weist eine Übertragungseinheit 40d mit zumindest einem Übertragungselement 42d zur Übertragung der Schlagkraft von dem Schlagantriebsmodul 18d auf das Werkzeug 12d auf. Das Übertragungselement 42d ist als ein Schlagbolzen ausgebildet, welcher in einem Hammerrohr 72d der Übertragungseinheit 40d gelagert ist. Analog zu den Ausführungsbeispielen der Figuren 6 und 7 ist das Übertragungselement 42d zu einer mittelbaren Übertragung der Schlagkraft von dem Schlagantriebsmodul 18d auf das Werkzeug 12d vorgesehen. Im Unterschied zu den Ausführungsbeispielen der Figuren 6 und 7 weist die Übertragungseinheit 40d zwei weitere Übertragungselemente 78d, 80d auf, welche ebenfalls in dem Hammerohr 72d angeordnet sind. Ein erstes weiteres Übertragungselement 78d der Übertragungseinheit 40d ist als ein Erreger-Kolben ausgebildet. Ein zweites weiteres Übertragungselement 80d der Übertragungseinheit 40d ist als ein Schläger ausgebildet. Zwischen dem ersten Übertragungselement 78d und dem zweiten Übertragungselement 80d ist ein Luftspalt 82d angeordnet. Der Strömungskanal 22d des Schlagantriebsmoduls 18d mündet in dem Hammerrohr 72d der Übertragungseinheit 40d.

In einem Betriebszustand der Schlagantriebseinheit 16d wird das als Erreger-Kolben ausgebildete erste weitere Übertragungselement 80d durch in einer Strömungsrichtung 36d wirkenden Druck des Fluids 20d in dem Hammerrohr 72d nach vorne gedrückt und überträgt dabei die Schlagkraft über den Luftspalt 82d auf das als Schläger ausgebildete zweite weitere Übertragungselement 80d, welches die Schlagkraft wiederum auf das als Schlagbolzen ausgebildete Übertragungselement 42d und somit auf das Werkzeug 12d überträgt.

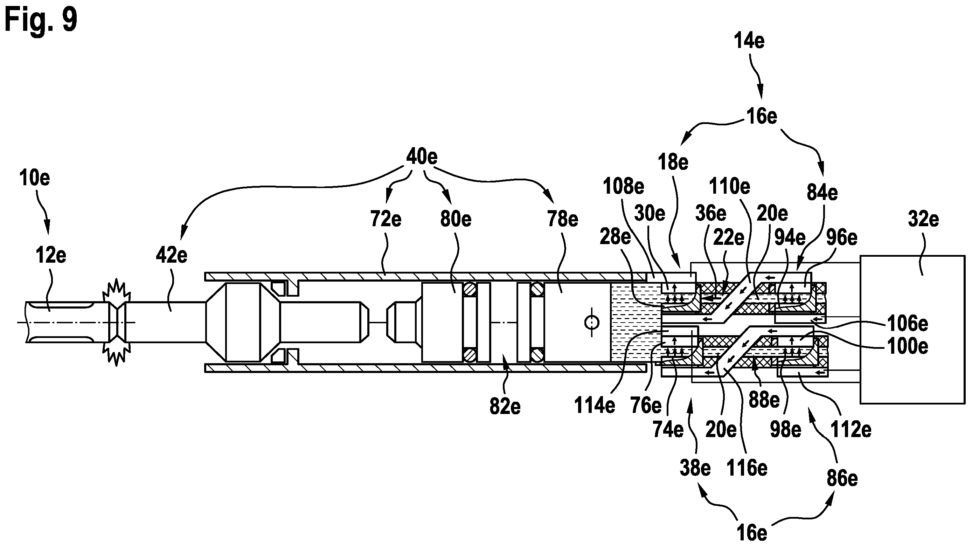

Figur 9 zeigt ein weiteres Ausführungsbeispiel einer Schlagvorrichtung 14e einer Werkzeugmaschine 10e (hier nicht dargestellt, vgl. Figur 1), welche beispielsweise als Schlagbohrmaschine oder als Bohrhammer ausgebildet sein kann.

Das in Figur 9 gezeigte Ausführungsbeispiel stellt eine Kombination der Ausführungsbeispiele der Figuren 7 und 8 dar. Analog zu den vorhergehenden Ausführungsbeispielen weist die Schlagvorrichtung 14e eine Schlagantriebseinheit 16e zur Erzeugung und Übertragung einer Schlagkraft auf ein Werkzeug 12e der Werkzeugmaschine 10e auf. Die Schlagantriebseinheit 16e weist analog zu dem Ausführungsbeispiel der Figur 7 zumindest ein Schlagantriebsmodul 18e zur Erzeugung der Schlagkraft basierend auf dem magnethydrodynamischen Effekt und zur Übertragung der Schlagkraft über ein Fluid 20e auf das Werkzeug 12e und zumindest ein weiteres Schlagantriebsmodul 38e auf, welches im Wesentlichen identisch zu dem Schlagantriebsmodul 18e ausgebildet und mit diesem hydraulisch parallel verschaltet ist. Ferner weist die Schlagantriebseinheit 16e zwei zusätzliche Schlagantriebsmodule 84e, 86e auf, welche jeweils im Wesentlichen identisch zu dem Schlagantriebsmodul 18e ausgebildet sind, wobei ein zusätzliches Schlagantriebsmodul 84e über einen Strömungskanal 22e hydraulisch in Reihe mit dem Schlagantriebsmodul 18e verschaltet, und ein weiteres zusätzliches Schlagantriebsmodul 86e über einen weiteren Strömungskanal 88e hydraulisch in Reihe mit dem weiteren Schlagantriebsmodul 38e verschaltet ist.

Ferner weist die Schlagantriebseinheit 16e eine Übertragungseinheit 40e auf, welche analog zu der Übertragungseinheit 40d aus dem Ausführungsbeispiel der Figur 8 ausgebildet ist.

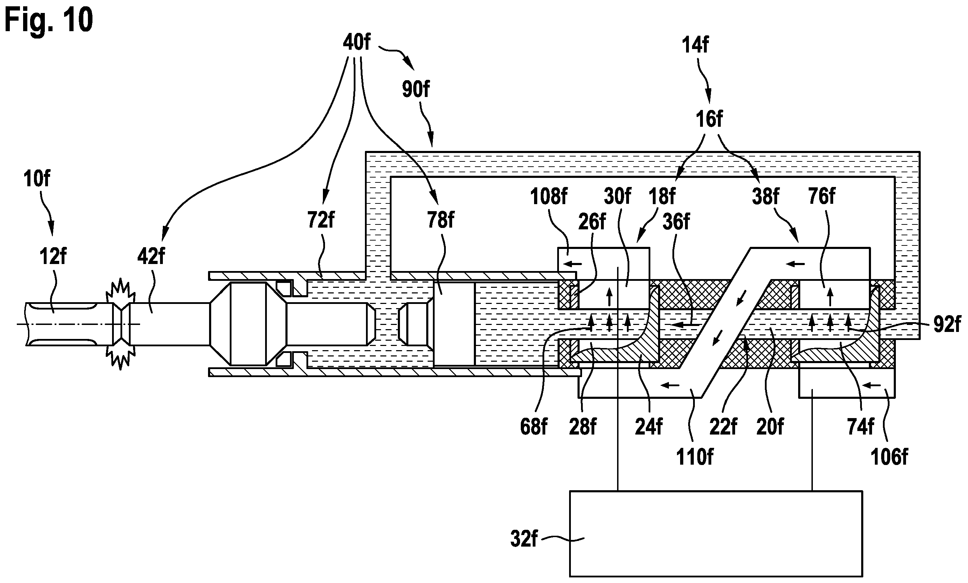

Analog zu dem Ausführungsbeispiel der Figur 7 weist die Werkzeugmaschine 10e eine mit Steuerelektroden 28e, 30e des Schlagantriebsmoduls 18e verbundene Steuer- und/oder Regeleinheit 32e zur Steuerung und/oder Regelung der Schlagantriebseinheit 16e mittels eines Steuerstroms (nicht mit einem Bezugszeichen versehen) auf. Die Steuer- und/oder Regeleinheit 32e ist indirekt mit den Steuerelektroden 28e, 30e des Schlagantriebsmoduls 18e verbunden und zwar über zwei Anschlusselektroden 106e, 108e der Schlagantriebseinheit 16e. Die Steuer- und/oder Regeleinheit 32e ist außerdem indirekt mit weiteren Steuerelektroden 74e, 76e des weiteren Schlagantriebsmodul 38e verbunden und zwar über zwei weitere Anschlusselektroden 112e, 114e der Schlagantriebseinheit 16e. Die Steuer- und/oder Regeleinheit 32e ist zur Steuerung des Schlagantriebsmoduls 18e, des weiteren Schlagantriebsmoduls 38e, des zusätzlichen Schlagantriebsmodul 84e sowie des weiteren zusätzlichen Schlagantriebsmoduls 86e mittels eines Steuerstroms (nicht mit einem Bezugszeichen versehen) vorgesehen. Das Schlagantriebsmodul 18e und das zusätzliche Schlagantriebsmodul 84e sind miteinander elektrisch in Reihe verschaltet und zwar über eine Verbindung 110e. Das weitere Schlagantriebsmodul 38e und das weitere zusätzliche Schlagantriebsmodul 86e sind miteinander elektrisch in Reihe verschaltet und zwar über eine weitere Verbindung 116e. Hinsichtlich einer Verschaltung der Steuer- und/oder Regeleinheit 32e mit den Schlagantriebsmodule 18e, 38e, 84e, 86e kann ansonsten auf die obige Beschreibung der Figur 7 verwiesen werden. Figur 10 zeigt ein weiteres Ausführungsbeispiel einer Schlagvorrichtung 14f einer Werkzeugmaschine 10f (hier nicht dargestellt, vgl. Figur 1), welche beispielsweise als Schlagbohrmaschine oder als Bohrhammer ausgebildet sein kann.

Das in Figur 10 gezeigte Ausführungsbeispiel stellt eine Weiterentwicklung des in den Figuren 1 bis 5 gezeigten Ausführungsbeispiels dar. Analog zu dem Ausführungsbeispiel der Figuren 1 bis 5 weist die Schlagvorrichtung 14f eine Schlagantriebseinheit 16f zur Erzeugung und Übertragung einer Schlagkraft auf ein Werkzeug 12f der Werkzeugmaschine 10f mit zumindest einem Schlagantriebsmodul 18f zur Erzeugung der Schlagkraft basierend auf dem magnethydrodynamischen Effekt und zur Übertragung der Schlagkraft über ein Fluid 20f auf das Werkzeug 12f und zumindest ein weiteres Schlagantriebsmodul 38f, welches im Wesentlichen identisch zu dem Schlagantriebsmodul 18f ausgebildet und mit diesem über einen Strömungskanal 22f hydraulisch in Reihe so verschaltet ist, dass sich die in den jeweiligen Schlagantriebsmodulen 18f, 38f erzeugten Kräfte zu der Schlagkraft addieren, auf.

Die Schlagantriebseinheit 16f weist eine Übertragungseinheit 40f auf, welche, analog zu der Übertagungseinheit 40b in dem Ausführungsbeispiel der Figur 6, zumindest ein in einem Hammerrohr 72f der Übertragungseinheit 40f angeordnetes und als Schlagbolzen ausgebildetes Übertragungselement 42f zur mittelbaren Übertragung der Schlagkraft von dem Schlagantriebsmodul 18f auf das Werkzeug 12f und zumindest ein als ein Schläger ausgebildetes erstes weiteres Übertragungselement 78f, welches ebenfalls in dem Hammerohr 72f angeordnet ist, aufweist. Im Unterschied zu dem Ausführungsbeispiel der Figur 6 weist die Übertragungseinheit 40f einen Rückführungskanal 90f auf, welcher an das Hammerrohr 72f angeschlossen ist. In einem Betriebszustand der Schlagantriebseinheit 16f wird das Fluid 20f durch die basierend auf dem magnethydrodynamischen Effekt in dem Schlagantriebsmodul 18f und dem weiteren Schlagantriebsmodul 38f erzeugten und auf die freien Ladungsträger in dem Fluid 20f wirkenden Lorentzkräfte gegen das als Schläger ausgebildete erste weitere Übertragungselement 78f gedrückt, sodass sich dieses in Strömungsrichtung 36f gegen das als Schlagbolzen ausgebildete Übertragungselement 42f bewegt und damit die Schlagkraft von dem Übertragungselement 42f auf das Werkzeug 12f überträgt. Sobald sich das erste weitere Übertragungselement 78f in dem Hammerrohr 72f in Strömungsrichtung 36f zumindest teilweise über eine Position, an welcher der Rückführungskanal 90f an das Hammerrohr 72f angeschlossen ist, bewegt hat, strömt ein Teil des Fluids 20f über den Rückführungskanal 90f zurück in den Strömungskanal 22f.

Analog zu den Ausführungsbeispielen der Figuren 3 und 8 weist die Werkzeugmaschine 10f eine mit Steuerelektroden 28f, 30f des Schlagantriebsmoduls 18f verbundene Steuer- und/oder Regeleinheit 32f zur Steuerung und/oder Regelung der Schlagantriebseinheit 16f mittels eines Steuerstroms (nicht mit einem Bezugszeichen versehen) auf. Vorliegend ist die Steuer- und/oder Regeleinheit 32f indirekt über zwei Anschlusselektroden 106f, 108f mit den Steuerelektroden 28f, 30f und zwei weiteren Steuerelektroden 74f, 76f des weiteren Schlagantriebsmoduls 38f verbunden. Das Schlagantriebsmodul 18f und das weitere Schlagantriebsmodul 38f sind elektrisch in Reihe verschaltet. Die Steuerelektrode 28f des Schlagantriebsmoduls 18f und die weitere Steuerelektrode 76f des weiteren Schlagantriebsmoduls 38f sind hierzu elektrisch leitend über eine Verbindung 110f miteinander verbunden.

Die Steuer- und/oder Regeleinheit 32f ist dazu vorgesehen, durch Änderung einer Stromrichtung des Steuerstroms eine Umkehr der Strömungsrichtung 36f des Fluids 20f in dem Strömungskanal 22f zu erzeugen. Im Unterschied zu den vorhergehenden Ausführungsbeispielen ist die Schlagantriebseinheit 16f dadurch beidseitig wirkend. Indem die Steuer- und/oder Regeleinheit 32f die Vorzeichen der zwischen den Steuerelektroden 28f, 30f des Schlagantriebsmoduls 18f und den weiteren Steuerelektroden 74f, 76f des weiteren Schlagantriebsmoduls 38f anliegenden Steuerspannungen umkehrt, wirken ein elektrisches Feld 68f zwischen den Steuerelektroden 28f, 30f und ein weiteres elektrisches Feld 92f zwischen den weiteren Steuerelektroden 74f, 76f jeweils in umgekehrter Richtung, sodass die aufgrund des magnethydrodynamischen Effekts auf die freien Ladungsträger in dem Fluid wirkenden Lorentzkräfte entgegen der ursprünglichen und in der Figur 10 dargestellten Strömungsrichtung 36f wirken beziehungsweise eine Umkehr der Strömungsrichtung 36f des Fluids 20f in dem Strömungskanal 22f erzeugt wird. Dies hat zur Folge, dass das Fluid 20f von dem Strömungskanal 22f über den Rückführungskanal 90f in das Hammerrohr 72f befördert wird, wodurch das erste weitere Übertragungselement 78f entgegen der ursprünglichen Strömungsrichtung 36f in dem Hammerrohr 72f zurückbewegt wird. Die Steuer- und/oder Regeleinheit 32f ist dazu vorgesehen, durch wiederholte Änderung der Stromrichtung des Steuerstroms eine wiederholte Umkehr der Strömungsrichtung 36f des Fluids 20f in dem Strömungskanal 22f zu erzeugen. Somit ist die Steuer- und/oder Regeleinheit 32f dazu vorgesehen, ein abwechselndes Pumpen und Saugen des Fluids 20f zu erzeugen, wodurch eine Intensität der Schlagwirkung verbessert werden kann. Vorzugsweise ist eine gewünschte Frequenz der Umkehr der Stromrichtung des Steuerstroms und damit eine Schlagfrequenz des ersten weitere Übertragungselements 78f auf das Übertragungselement 42f und damit auf das Werkzeug 12f durch einen Nutzer über die Steuer- und/oder Regeleinheit 32f, welche ein entsprechendes Eingabeelement (nicht dargestellt) aufweisen kann, einstellbar.

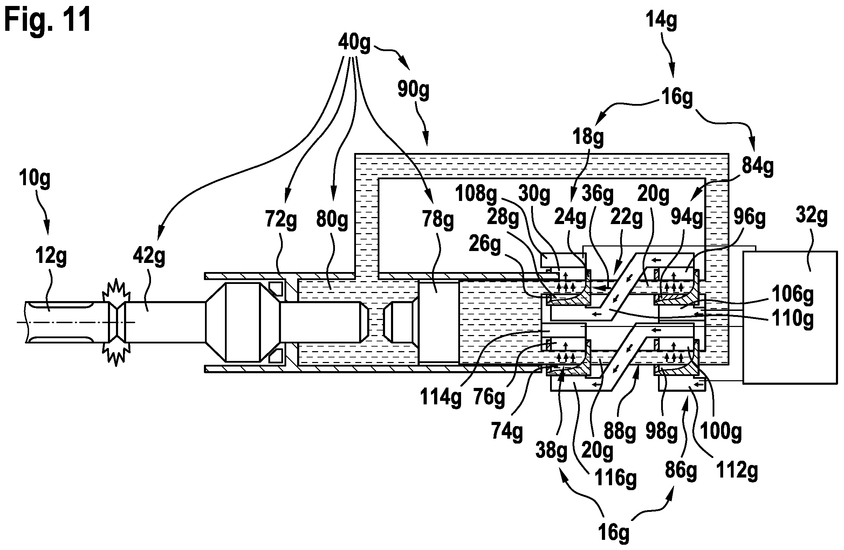

Figur 11 zeigt ein weiteres Ausführungsbeispiel einer Schlagvorrichtung 14g einer Werkzeugmaschine 10g (hier nicht dargestellt, vgl. Figur 1), welche beispielsweise als Schlagbohrmaschine oder als Bohrhammer ausgebildet sein kann. Das in Figur 11 gezeigte Ausführungsbeispiel stellt eine Kombination der Ausführungsbeispiele der Figuren 7 und 10 dar. Analog zu dem Ausführungsbeispiel der Figur 7 weist die Schlagvorrichtung 14g zumindest ein Schlagantriebsmodul 18g zur Erzeugung der Schlagkraft basierend auf dem auf dem magnethydrodynamischen Effekt und zur Übertragung der Schlagkraft über ein Fluid 20g auf das Werkzeug 12g und zumindest ein weiteres Schlagantriebsmodul 38g auf, welches im Wesentlichen identisch zu dem Schlagantriebsmodul 18g ausgebildet und mit diesem hydraulisch parallel verschaltet ist. Ferner weist die Schlagantriebseinheit 16g zwei zusätzliche Schlagantriebsmodule 84g, 86g auf, welche jeweils im Wesentlichen identisch zu dem Schlagantriebsmodul 18g ausgebildet sind, wobei ein zusätzliches Schlagantriebsmodul 84g über einen Strömungskanal 22g hydraulisch in Reihe mit dem Schlagantriebsmodul 18g verschaltet, und ein weiteres zusätzliches Schlagantriebsmodul 86g über einen weiteren Strömungskanal 88g hydraulisch in Reihe mit dem weiteren Schlagantriebsmodul 38g verschaltet ist.

Analog zu dem Ausführungsbeispiel der Figur 10 weist die Schlagantriebseinheit 16g eine Übertragungseinheit 40g mit einem in einem Hammerrohr 72g der Übertragungseinheit 40g angeordneten und als Schlagbolzen ausgebildeten Übertragungselement 42g zur mittelbaren Übertragung der Schlagkraft und zumindest ein als ein Schläger ausgebildetes erstes weiteres Übertragungselement 78g, welches ebenfalls in dem Hammerohr 72g angeordnet ist, auf. Ferner weist die Übertragungseinheit 40g einen Rückführungskanal 90g auf, welcher an das Hammerrohr 72g angeschlossen ist und hydraulisch mit dem Strömungskanal 22g und dem weiteren Strömungskanal 88g verbunden ist.

Analog zu den Ausführungsbeispielen der Figuren 7 und 9 weist die Werkzeugmaschine 10g eine mit Steuerelektroden 28g, 30g des Schlagantriebsmoduls 18g verbundene Steuer- und/oder Regeleinheit 32g zur Steuerung und/oder Regelung der Schlagantriebseinheit 16g mittels eines Steuerstroms (nicht mit einem Bezugszeichen versehen) auf. Die Steuer- und/oder Regeleinheit 32g ist indirekt mit den Steuerelektroden 28g, 30g des Schlagantriebsmoduls 18g verbunden und zwar über zwei Anschlusselektroden 106g, 108g der Schlagantriebseinheit 16g. Die Steuer- und/oder Regeleinheit 32g ist außerdem indirekt mit weiteren Steuerelektroden 74g, 76g des weiteren Schlagantriebsmodul 38g verbunden und zwar über zwei weitere Anschlusselektroden 112g, 114g der Schlagantriebseinheit 16g. Die Steuer- und/oder Regeleinheit 32g ist zur Steuerung des Schlagantriebsmoduls 18g, des weiteren Schlagantriebsmoduls 38g, des zusätzlichen Schlagantriebsmodul 84g sowie des weiteren zusätzlichen Schlagantriebsmoduls 86g mittels eines Steuerstroms (nicht mit einem Bezugszeichen versehen) vorgesehen. Das Schlagantriebsmodul 18g und das zusätzliche Schlagantriebsmodul 84g sind miteinander elektrisch in Reihe verschaltet und zwar über eine Verbindung 110g. Das weitere Schlagantriebsmodul 38g und das weitere zusätzliche Schlagantriebsmodul 86g sind miteinander elektrisch in Reihe verschaltet und zwar über eine weitere Verbindung 116g. Hinsichtlich einer Verschaltung der Steuer- und/oder Regeleinheit 32g mit den Schlagantriebsmodule 18g, 38g, 84g, 86g kann ansonsten auf die obige Beschreibung der Figur 7 verwiesen werden. Die Steuer- und/oder Regeleinheit 32g ist dazu vorgesehen, durch Änderung einer Stromrichtung des Steuerstroms eine Umkehr einer Strömungsrichtung 36g des Fluids 20g in dem Strömungskanal 22g und dem weiteren Strömungskanal 88g zu erzeugen. Analog zu dem Ausführungsbeispiel der Figur 10 ist die Schlagantriebseinheit 16g dadurch beidseitig wirkend.

## Patentansprüche

1. Werkzeugmaschine (10a-g) mit einem Werkzeug (12a-g) und mit einer Schlagvorrichtung (14a-g), welche eine Schlagantriebseinheit (16a-g) zur Erzeugung und Übertragung einer Schlagkraft auf das Werkzeug (12a-g) aufweist, **dadurch gekennzeichnet, dass** die Schlagantriebseinheit (16ag) zumindest ein Schlagantriebsmodul (18a-g) zur Erzeugung der Schlagkraft basierend auf dem magnethydrodynamischen Effekt und zur Übertragung der Schlagkraft über ein Fluid (20a-g) auf das Werkzeug (12a-g) aufweist.

2. Werkzeugmaschine (10a-g) nach Anspruch 1, **dadurch gekennzeichnet, dass** das Schlagantriebsmodul (18a-g) zumindest einen Strömungskanal (22a-g) für das Fluid (20a-g), zumindest zwei außerhalb des Strömungskanals (22a-g) angeordnete Magnetelemente (24a-g, 26a-g) und zumindest zwei mit dem Strömungskanal (22a-g) verbundene Steuerelektroden (28ag, 30a-g) umfasst, wobei die Magnetelemente (24a-g, 26a-g) und die Steuerelektroden (28a-g, 30a-g) dazu vorgesehen sind, eine Lorentzkraft in dem Fluid (20a-g) zur Erzeugung der Schlagkraft zu bewirken.

3. Werkzeugmaschine (10a-g) nach Anspruch 2, **gekennzeichnet durch** eine mit den Steuerelektroden (28a-g, 30a-g) des Schlagantriebsmoduls (18a-g) verbundene Steuer- und/oder Regeleinheit (32a-g) zur Steuerung und/oder Regelung der Schlagantriebseinheit (16a-g) mittels eines Steuerstroms (34a).

4. Werkzeugmaschine (10f; 10g) nach Anspruch 3, **dadurch gekennzeichnet, dass** die Steuer- und/oder Regeleinheit (32f; 32g) dazu vorgesehen ist, durch Änderung einer Stromrichtung des Steuerstroms eine Umkehr einer Strömungsrichtung (36f; 36g) des Fluids (20f; 20g) in dem Strömungskanal (22f; 22g) zu erzeugen.

5. Werkzeugmaschine (10a-g) nach Anspruch 3 oder 4, **dadurch gekennzeichnet, dass** die Steuer- und/oder Regeleinheit (32a-g) dazu vorgesehen ist, das Schlagantriebsmodul (18a-g) mit einem gepulsten Steuerstrom (24a) anzusteuern, um Druckwellen in dem Fluid zu erzeugen.

6. Werkzeugmaschine (10a; 10c-g) nach einem der vorhergehenden Ansprüche, **dadurch gekennzeichnet, dass** die Schlagantriebseinheit (16a; 16c-g) zumindest ein weiteres Schlagantriebsmodul (38a; 38c-g) aufweist, welches im Wesentlichen identisch zu dem Schlagantriebsmodul (18a, 18c-g) ausgebildet ist, wobei das Schlagantriebsmodul (18a; 18c-g) und das weitere Schlagantriebsmodul (38a; 38c-g) hydraulisch so miteinander verschaltet sind, dass sich die in den jeweiligen Schlagantriebsmodulen (18a; 38a; 18c-g, 38c-g) erzeugten Kräfte zu der Schlagkraft addieren und/oder dass sich die Durchflüsse des Fluids (20a, 20c-g) addieren.

7. Werkzeugmaschine (10a; 10d; 10f) nach Anspruch 6, **dadurch gekennzeichnet, dass** das Schlagantriebsmodul (18a; 18d; 18f) und das weitere Schlagantriebsmodul (38a; 38d; 38f) miteinander hydraulisch in Reihe verschaltet sind.

8. Werkzeugmaschine (10c; 10e; 10g) nach Anspruch 6, **dadurch gekennzeichnet, dass** das Schlagantriebsmodul (18c; 18e; 18g) und das weitere Schlagantriebsmodul (38c; 38e; 38g) miteinander hydraulisch parallel verschaltet sind.

9. Werkzeugmaschine (10a-g) nach einem der vorhergehenden Ansprüche, **dadurch gekennzeichnet, dass** das Fluid (20a-g) als ein Metall und/oder als eine Metalllegierung ausgebildet ist, welche/s unter Standardbedingungen flüssig, und/oder zumindest im Wesentlichen inkompressibel ist.

10. Werkzeugmaschine (10a-g) nach einem der vorhergehenden Ansprüche, **dadurch gekennzeichnet, dass** die Schlagantriebseinheit (16a-g) eine Übertragungseinheit (40a-g) mit zumindest einem Übertragungselement (42a-g), insbesondere einem Kolben und/oder Balg, zur Übertragung der Schlagkraft von dem Schlagantriebsmodul (16a-g) auf das Werkzeug (12ag) aufweist.

11. Werkzeugmaschine (10b) nach einem der vorhergehenden Ansprüche, **gekennzeichnet durch** ein Sensormodul (44b) zur Erfassung zumindest eines aktuellen Strömungsparameters des Fluids (20b) basierend auf dem magnethydrodynamischen Effekt, wobei das Sensormodul (40b) zumindest im Wesentlichen identisch zu dem Schlagantriebsmodul (18b) ausgebildet und mit diesem hydraulisch verbunden ist.

12. Werkzeugmaschine (10b) nach Anspruch 11, **gekennzeichnet durch** eine mit dem Sensormodul (44b) verbundene Analyseeinheit (46b) zur Erfassung zumindest eines Betriebsparameters basierend auf Daten des Sensormoduls (44b).

13. Verfahren zum Betrieb einer Werkzeugmaschine (10a-g), insbesondere nach einem der Ansprüche 1 bis 12, wobei eine Schlagkraft erzeugt und auf ein Werkzeug (12a-g) der Werkzeugmaschine (10-g) übertragen wird, **dadurch gekennzeichnet, dass** die Schlagkraft basierend auf dem magnethydrodynamischen Effekt erzeugt und über ein Fluid (20a-g) auf das Werkzeug (12a-g) übertragen wird.

## Claims

1. Machine tool (10a-g) having a tool (12a-g) and having a striking device (14a-g) that has an impact drive unit (16a-g) for generating and transmitting an impact force to the tool (12a-g), **characterized in that** the impact drive unit (16a-g) has at least one impact drive module (18a-g) for generating the impact force based on the magnetic hydrodynamic effect and for transmitting the impact force to the tool (12a-g) via a fluid (20a-g).

2. Machine tool (10a-g) according to Claim 1, **characterized in that** the impact drive module (18a-g) comprises at least one flow channel (22a-g) for the fluid (20a-g), at least two magnetic elements (24a-g, 26a-g) arranged outside the flow channel (22a-g) and at least two control electrodes (28a-g, 30a-g) connected to the flow channel (22a-g), wherein the magnetic elements (24a-g, 26a-g) and the control electrodes (28a-g, 30a-g) are intended to cause a Lorentz force in the fluid (20a-g) in order to generate the impact force.

3. Machine tool (10a-g) according to Claim 2, **characterized by** an open-loop and/or closed-loop control unit (32a-g) connected to the control electrodes (28a-g, 30a-g) of the impact drive module (18a-g) in order to control the impact drive unit (16a-g) by way of open-loop and/or closed-loop control by means of a control current (34a).

4. Machine tool (10f; 10g) according to Claim 3, **characterized in that** the open-loop and/or closed-loop control unit (32f; 32g) is intended to produce a reversal of a flow direction (36f; 36g) of the fluid (20f; 20g) in the flow channel (22f; 22g) by changing a current direction of the control current.

5. Machine tool (10a-g) according to Claim 3 or 4, **characterized in that** the open-loop and/or closed-loop control unit (32a-g) is intended to actuate the impact drive module (18a-g) with a pulsed control current (24a) in order to produce pressure waves in the fluid.

6. Machine tool (10a; 10c-g) according to one of the preceding claims, **characterized in that** the impact drive unit (16a; 16c-g) has at least one further impact drive module (38a; 38c-g), which is substantially identical to the impact drive module (18a, 18c-g), wherein the impact drive module (18a; 18c-g) and the further impact drive module (38a; 38c-g) are hydraulically interconnected in such a way that the forces generated in the respective impact drive modules (18a; 38a; 18c-g, 38c-g) add up to the impact force and/or that the flows of the fluid (20a, 20c-g) add up.

7. Machine tool (10a; 10d; 10f) according to Claim 6, **characterized in that** the impact drive module (18a; 18d; 18f) and the further impact drive module (38a; 38d; 38f) are hydraulically interconnected in series.

8. Machine tool (10c; 10e; 10g) according to Claim 6, **characterized in that** the impact drive module (18c; 18e; 18g) and the further impact drive module (38c; 38e; 38g) are hydraulically interconnected in parallel.

9. Machine tool (10a-g) according to one of the preceding claims, **characterized in that** the fluid (20a-g) is in the form of a metal and/or in the form of a metal alloy that, under standard conditions, is liquid, and/or at least substantially incompressible.

10. Machine tool (10a-g) according to one of the preceding claims, **characterized in that** the impact drive unit (16a-g) has a transmitting unit (40a-g) having at least one transmitting element (42a-g), in particular a piston and/or bellows, for transmitting the impact force from the impact drive module (16a-g) to the tool (12a-g).

11. Machine tool (10b) according to one of the preceding claims, **characterized by** a sensor module (44b) for detecting at least one present flow parameter of the fluid (20b) based on the magnetic hydrodynamic effect, wherein the sensor module (40b) is at least substantially identical to the impact drive module (18b) and is hydraulically connected thereto.

12. Machine tool (10b) according to Claim 11, **characterized by** an analysis unit (46b) connected to the sensor module (44b) for detecting at least one operating parameter based on data of the sensor module (44b).

13. Method for operating a machine tool (10a-g), in particular according to one of Claims 1 to 12, wherein an impact force is generated and transmitted to a tool (12a-g) of the machine tool (10-g), **characterized in that** the impact force is generated based on the magnetic hydrodynamic effect and is transmitted to the tool (12a-g) via a fluid (20a-g).

## Revendications

1. Machine-outil (10a-g) comprenant un outil (12a-g) et un dispositif de percussion (14a-g), qui comporte une unité d'entraînement de percussion (16a-g) destinée à générer et à transmettre une force de percussion à l'outil (12a-g), **caractérisée en ce que** l'unité d'entraînement de percussion (16a-g) comprend au moins un module d'entraînement de percussion (18a-g) destiné à générer la force de percussion sur la base de l'effet magnétohydrodynamique et pour transmettre la force de percussion par l'intermédiaire d'un fluide (20a-g) à l'outil (12a-g).

2. Machine-outil (10a-g) selon la revendication 1, **caractérisée en ce que** le module d'entraînement de percussion (18a-g) comprend au moins un canal d'écoulement (22a-g) pour le fluide (20a-g), au moins deux éléments magnétiques (24a-g, 26a-g) disposés à l'extérieur du canal d'écoulement (22a-g) et au moins deux électrodes de commande (28a-g, 30a-g) reliées au canal d'écoulement (22a-g), les éléments magnétiques (24a-g, 26a-g) et les électrodes de commande (28a-g, 30a-g) étant prévus pour produire une force de Lorentz dans le fluide (20a-g) afin de générer la force de percussion.

3. Machine-outil (10a-g) selon la revendication 2, **caractérisée par** une unité de commande et/ou de régulation (32a-g) reliée aux électrodes de commande (28a-g, 30a-g) du module d'entraînement de percussion (18a-g) pour commander et/ou réguler l'unité d'entraînement de percussion (16a-g) au moyen d'un courant de commande (34a).

4. Machine-outil (10f ; 10g) selon la revendication 3, **caractérisée en ce que** l'unité de commande et/ou de régulation (32f ; 32g) est prévue pour inverser une direction d'écoulement (36f ; 36g) du fluide (20f ; 20g) dans le canal d'écoulement (22f ; 22g) en changeant le sens du courant de commande.

5. Machine-outil (10a-g) selon la revendication 3 ou 4, **caractérisée en ce que** l'unité de commande et/ou de régulation (32a-g) est prévue pour piloter le module d'entraînement de percussion (18a-g) avec un courant de commande pulsé (24a) afin de générer des ondes de pression dans le fluide.

6. Machine-outil (10a ; 10c-g) selon l'une quelconque des revendications précédentes, **caractérisée en ce que** l'unité d'entraînement de percussion (16a ; 16c-g) comprend au moins un module d'entraînement de percussion supplémentaire (38a ; 38c-g) qui est conçu de manière sensiblement identique au module d'entraînement de percussion (18a, 18c-g), le module d'entraînement de percussion (18a ; 18c-g) et le module d'entraînement de percussion supplémentaire (38a ; 38c-g) étant raccordés l'un à l'autre de manière hydraulique de telle sorte que les forces générées dans les modules d'entraînement de percussion (18a ; 38a ; 18c-g, 38c-g) respectifs s'additionnent pour produire la force de percussion et/ou que les débits du fluide (20a, 20c-g) s'additionnent.

7. Machine-outil (10a ; 10d ; 10f) selon la revendication 6, **caractérisée en ce que** le module d'entraînement de percussion (18a ; 18d ; 18f) et le module d'entraînement de percussion supplémentaire (38a ; 38d ; 38f) sont raccordés l'un à l'autre de manière hydraulique en série.

8. Machine-outil (10c ; 10e ; 10g) selon la revendication 6, **caractérisée en ce que** le module d'entraînement de percussion (18c ; 18e ; 18g) et le module d'entraînement de percussion supplémentaire (38c ; 38e ; 38g) sont raccordés l'un à l'autre de manière hydraulique en parallèle.

9. Machine-outil (10a-g) selon l'une quelconque des revendications précédentes, **caractérisée en ce que** le fluide (20a-g) est constitué par un métal et/ou un alliage métallique qui est liquide et/ou au moins sensiblement incompressible dans des conditions standard.

10. Machine-outil (10a-g) selon l'une quelconque des revendications précédentes, **caractérisée en ce que** l'unité d'entraînement de percussion (16a-g) comprend une unité de transmission (40a-g) comportant au moins un élément de transmission (42a-g), notamment un piston et/ou un soufflet, destiné à transmettre la force de percussion du module d'entraînement de percussion (16a-g) à l'outil (12a-g).

11. Machine-outil (10b) selon l'une quelconque des revendications précédentes, **caractérisée par** un module capteur (44b) destiné à détecter au moins un paramètre d'écoulement actuel du fluide (20b) sur la base de l'effet magnétohydrodynamique, le module capteur (40b) étant au moins sensiblement identique au module d'entraînement de percussion (18b) et étant relié de manière hydraulique à celui-ci.

12. Machine-outil (10b) selon la revendication 11, **caractérisée par** une unité d'analyse (46b) reliée au module capteur (44b) pour détecter au moins un paramètre de fonctionnement sur la base de données du module capteur (44b).

13. Procédé de fonctionnement d'une machine-outil (10a-g), notamment selon l'une quelconque des revendications 1 à 12, une force de percussion étant générée et transmise à un outil (12a-g) de la machine-outil (10a-g), **caractérisé en ce que** la force de percussion est générée sur la base de l'effet magnétohydrodynamique et est transmise à l'outil (12a-g) par l'intermédiaire d'un fluide (20a-g).
